(19) Europäisches Patentamt
European Patent Office
Office européen des brevets

(11) **EP 2 026 054 B1**

(12) **EUROPÄISCHE PATENTSCHRIFT**

(45) Veröffentlichungstag und Bekanntmachung des Hinweises auf die Patenterteilung:
**15.06.2016 Patentblatt 2016/24**

(21) Anmeldenummer: **08013029.7**

(22) Anmeldetag: **18.07.2008**

(51) Int Cl.:
*G01K 11/12* *(2006.01)*  *G01N 21/55* *(2006.01)*
*A61C 13/20* *(2006.01)*  *F27B 17/02* *(2006.01)*

(54) **Verfahren zur optischen Kontrolle des Verlaufs von auf einer Oberfläche eines Körpers erfolgenden physikalischen und/oder chemischen Prozessen**

Method for optically monitoring the course of physical and/or chemical processes occurring on the surface of a body

Procédé de contrôle optique du déroulement de processus chimiques et/ou physiques survenant à la surface d'un corps

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.07.2007 DE 102007035609**

(43) Veröffentlichungstag der Anmeldung:
**18.02.2009 Patentblatt 2009/08**

(73) Patentinhaber: **Ivoclar Vivadent AG**
**9494 Schaan (LI)**

(72) Erfinder:
• **Feichtinger, Heinrich**
**8132 Hinteregg (CH)**

• **Rohner, Gottfried**
**9450 Altstätten (CH)**
• **Jussel, Rudolf**
**6806 Feldkirch-Tosters (AT)**

(74) Vertreter: **Baronetzky, Klaus**
**Splanemann**
**Patentanwälte Partnerschaft**
**Rumfordstrasse 7**
**80469 München (DE)**

(56) Entgegenhaltungen:
**DE-A1- 2 644 299   DE-B3- 10 341 491**
**US-A- 5 769 540**

## Beschreibung

Die Erfindung betrifft ein Verfahren zur optischen Kontrolle des Verlaufs eines auf einer Oberfläche eines Körpers erfolgenden physikalischen und/oder chemischen Prozesses, gemäss dem Oberbegriff von Anspruch 1, bei dem von einem Teil der Oberfläche ausgehende Oberflächenstrahlung mit Hilfe einer Messvorrichtung, insbesondere eines Sensors, gemessen wird sowie eine Vorrichtung gemäss dem Anspruch 10. Verfahren der eingangs genannten Art sind dem Fachmann bekannt und geläufig.

Thermisch aktivierte Prozesse werden in ihrem Ablauf in der Regel durch fortlaufende Beobachtung der Temperatur und entsprechende Anpassung der Ofenleistung gesteuert. Als typisches Beispiel eines solchen Prozesses sei das Sintern in einem Brennofen, insbesondere in einem Dentalbrennofen, genannt, bei dem eine keramische Masse möglichst perfekt gebrannt werden soll. Dies geschieht meist unter Verwendung einer im Rahmen zahlreicher Versuche ermittelten Zeit-Temperatur-Kurve, denn ein optimales Brennergebnis ist innerhalb bestimmter Grenzen mit verschiedenen Kombinationen der Parameter Zeit und Temperatur erreichbar. Dabei kommt der Messung der Temperatur besondere Bedeutung zu, denn in Abwesenheit einer direkten Kontrolle des Sinterfortschritts kann ein optimales Ergebnis nur bei genauester Einhaltung der Temperatur-Zeit-Kurve erzielt werden.

Die Kontrolle des Sintererfolgs geschieht meist erst nach Abschluss des Brennprozesses, also zu einem Zeitpunkt, zu dem Korrekturen nicht mehr möglich und die auf diese Weise produzierten Werkstücke eventuell zu Ausschuss geworden sind.

Aus diesem Grunde ist immer wieder versucht worden, den Fortgang des Sinterprozesses direkt zu messen. Eine seit langem bekannte Massnahme dieser Art sind sogenannte Segerkegel, welche in definierter Weise den kombinierten Einfluss von Temperatur und Zeit durch Änderung ihrer Geometrie zum Ausdruck bringen. Abgesehen vom Aufwand einer solchen Methode benötigt die Interpretation der am Prüfkörper beobachteten Veränderungen ein hohes Mass an Erfahrung bei der Bewertung des Zustands der eigentlichen Brenncharge.

In neuerer Zeit sind auch verschiedene Verfahren der »optischen Dilatometrie« eingeführt worden, bei denen die Längenänderung einer idealisierten Probe mittels eines Bilderkennungssystems während des Brennverlaufs fortlaufend verfolgt wird. Dieses Verfahren wird in der Regel jedoch nur im Labor für die keramische Forschung verwendet, potenziell wäre es auch für die industrielle Anwendung geeignet, allerdings mit dem Nachteil, dass es sich auch in diesem Fall um eine idealsierte Probe handelt, deren Befund nicht direkt auf die industrielle Brenncharge übertragen werden kann.

DE 41 32 203 beschreibt ein optisches Verfahren zur Steuerung eines Schmelz- oder Gießvorgangs. Dieses Verfahren ist jedoch nur für die Messung von Umwandlungen geeignet, die von einem starken Wärmeumsatz begleitet sind, wie dies beim Schmelzen und Erstarren der Fall ist. Im Prinzip beruht das Verfahren auf der optischen Wahrnehmung des Temperatur-Haltepunkts, der beim Überschreiten der Phasenumwandlung auftritt, im Unterschied zu üblichen optischen Temperaturmessverfahren benötigt das Verfahren jedoch keine exakte Eichung, da der Temperaturhaltepunkt aus der Unstetigkeit des Verlaufs der Strahlungsintensität bestimmt werden kann, ohne dass dazu die exakte Kenntnis der Temperatur nötig ist. Obwohl hier also der Terminus »Strahlungsintensität« verwendet wird, ist dieses Verfahren eindeutig der grossen Gruppe der optischen Temperaturmessverfahren zugehörig und keinesfalls für die Ermittlung der Oberflächenveränderungen im weiteren Sinne geeignet, und insbesondere bei Abwesenheit von Wärmeumsatz geeignet.

In ähnlicher Weise beschreibt auch EP-A2-191 300 die Detektion des Aufschmelzprozesses einer Metalllegierung in einem Vakuumschmelzofen, die gleichzeitig mit dem Temperaturhaltepunkt auftretende Änderung des Emissionsgrades der Oberfläche durch Aufreissen des Oxidfilms auf der Schmelze wird bei diesem Patent jedoch als Störeffekt aufgefasst, welcher die einwandfreie Detektion des Schmelzpunkts über die Auswertung des Verlaufs der Strahlungsintensität erschwert und es werden Massnahmen vorgeschlagen, mit denen die störende Wirkung dieses Effekts auf die optische Temperaturmessung ausgeschlossen werden kann. Gerade dieser Störeffekt, d.h. die nicht von der Temperatur beeinflussten Veränderungen der Strahlungsintensität bei chemischen und/oder physikalischen Prozessen, ist jedoch Gegenstand und Kern des vorliegenden Patentgedankens, welcher sich nicht mit den Problemen der optischen Temperaturmessung befasst.

In ähnlicher Weise enthalten auch die meisten Gebrauchsanweisungen optischer Pyrometer warnende Hinweise, falls die Temperatur z.B. im Verlauf einer physikalischen oder chemischen Umwandlung oder bei einem Sinterprozess exakt gemessen werden soll. Da sich der Emissionsgrad im Verlauf solcher Prozesse ändern kann, wird empfohlen, die entsprechende Einstellung am optischen Pyrometer laufend zu verändern, da sonst die gemessenen Temperaturwerte nicht stimmen. Es ist gerade diese Messabweichung, die bei nicht nachgestellten, d.h. auf einen konstanten Emissionsgrad eingestellten optischen Pyrometern auftritt, eine Abweichung, die also nicht Folge der Temperaturänderung an sich sondern der Änderung der optischen Eigenschaften und/oder der Topographie der gemessenen Oberfläche ist, welche entsprechend dem Erfindungsgedanken zur Bestimmung eines physikalischen und/oder chemischen Prozesses verwendet wird. Im Gegensatz zu allen vorgenannten optischen Verfahren, welche nur solche Reaktionen detektieren können, bei denen ein Wärmeumsatz stattfindet, kann das erfindungsgemäße Verfahren deshalb auch Prozesse messtechnisch erfassen, bei denen kein Austausch von Wärme mit der Umgebung erfolgt.

Bevor das erfindungsgemäße Verfahren näher beschrieben wird, sollen vorgängig einige für das Verfahren wesentliche Begriffe näher beschrieben werden. Der Emissionsgrad beschreibt das Strahlungsverhalten einer Oberfläche im Vergleich mit einem Schwarzen Körper. Ein solcher Schwarzer Körper besitzt eine hypothetisch idealisierte Oberfläche, welche jede auf sie auftreffende elektromagnetische Strahlung unabhängig von der Frequenz vollständig absorbiert. Nach dem Kirchhoffschen Strahlungsgesetz sind Absorptions- und Emissionsvermögen eines Körpers stets proportional und da der Schwarze Körper bei jeder Wellenlänge das grösstmögliche Absorptionsvermögen von 100% besitzt, gibt er bei jeder Temperatur die maximale thermische Strahlungsleistung ab. Diese Strahlung ist richtungsunabhängig und hat deshalb diffusen Charakter und wird durch das Plancksche Strahlungsgesetz beschrieben.

Im Gegensatz dazu absorbiert die Oberfläche eines grauen Körpers die auftreffende Strahlung nur zum Teil, was bedeutet, dass auch weniger Strahlung als beim Schwarzen Körper emittiert wird, das Verhältnis der Strahlungsmengen wird durch den Emissionsgrad e zum Ausdruck gebracht, der Werte zwischen 0 und 1 annehmen kann. Der Wert 0 gilt dabei für einen hypothetischen weissen Körper, der keine Strahlung aufnimmt sondern diese restlos reflektiert, der Wert 1 für den Schwarzen Körper, der alle Strahlung aufnimmt und keine Reflektivität besitzt. In der Realität gehören die meisten Körper der Gruppe der grauen Strahler an und besitzen demgemäss ein gewisses Mass an Absorption und gleichzeitig an Reflektivität, bei durchsichtigen Materialien wie Gläsern kommt noch das Transmissionsvermögen dazu, wobei die Summe dieser drei Eigenschaften immer bei 100% liegt. Infolge der Refektivität ist das Strahlungsverhalten grauer Körper im Gegensatz zum Schwarzen Körper richtungsabhängig. Die von einem Detektor von einer Oberfläche empfangene Strahlungsmenge hängt also einerseits vom Emissionsvermögen und über den Einfluss der Richtungsabhängigkeit auch noch von der Topographie dieser Oberfläche ab.

Die Verhältnisse des Schwarzen Körpers können in der Praxis annähernd durch das Konzept eines Hohlraumstrahlers erfüllt werden. Dies ist ein allseitig umschlossener Raum gleicher Temperatur, in den keine Fremdstrahlung eindringt, d.h. es herrscht ein Gleichgewicht zwischen absorbierter und emittierter Strahlung. Solche Verhältnisse herrschen z.B. annähernd in gut wärmeisolierten Sinteröfen, in denen die Temperatur nur langsam geändert wird, d.h. Ofeninhalt, Heizelemente und Ofenwände besitzen annähernd gleiche Temperaturen, der Emissionsgrad beträgt unter solchen Verhältnissen praktisch 1. Dies ist ideal für eine exakte optische Temperaturmessung, denn Änderungen der optischen Eigenschaften und/oder der Topographie einer in einem solchen Raum befindlichen Fläche wirken sich nicht mehr auf deren Strahlungsverhalten aus.

Ausgehend von den dargelegten Nachteilen sowie unter Würdigung des aufgezeigten Standes der Technik bei Verfahren der eingangs genannten Art liegt der vorliegenden Erfindung daher die Aufgabe zugrunde, ein Verfahren gemäss dem Oberbegriff von Anspruch 1 sowie eine Vorrichtung gemäss dem Oberbegriff von Anspruch 17 so auszubilden, dass auch solche Prozesse optisch detektiert werden können, bei denen kein Wärmeaustausch stattfindet, mit dem z.B. ein Schmelz- oder Erstarrungsprozess über den dabei auftretenden Haltepunkt detektiert wird, darüber hinaus sollen auch Prozesse unter den Bedingungen der Hohlraumstrahlung erfasst werden können, also etwa ein Sinterprozess, in dem die Charge mit dem Ofen praktisch im Temperaturgleichgewicht steht.

Diese Aufgabe wird erfindungsgemäß durch Anspruch 1 gelöst. Vorteilhafte Weiterbildungen ergeben sich aus den Unteransprüchen.

Gemäss der Erfindung wird Fremdstrahlung (14) auf die Oberfläche (10) eingestrahlt, wobei Änderungen des Emissionsgrades und/oder der Topographie, welche als Folge eines chemischen und/oder physikalischen Prozesses auftreten, zu einem veränderten Anteil der reflektierten Fremdstrahlung und damit der Intensität der zum Detektor (16) gelangenden Strahlung (13) führen.

In einer ersten Variante der erfindungsgemäßen Idee kann die Fremdstrahlung (14) dabei von Oberflächen in der Umgebung des Körpers (11) stammen, welche auf seine Oberfläche einstrahlen, wobei sie infolge abweichender Temperatur von dem als Folge der Eigentemperatur von der Oberfläche (10) abgestrahlten Spektrum abweichen, sodass die vom Detektor (16) wahrgenommene Strahlungsintensität der Strahlung (13) auch reflektierte Anteile der Fremdstrahlung (14) enthält. Wie groß dieser Anteil reflektierter Fremdstrahlung ausfällt, hängt vom Emissionsgrad und/oder der Topographie der Oberfläche (10) ab, und falls es als Folge einer physikalischen und/oder chemischen Reaktion zur Veränderung eines dieser Kriterien kommt, so macht sich dies als Unstetigkeit im zeitlichen Verlauf der vom Detektor wahrgenommenen Kurve der Strahlungsintensität bemerkbar. Diese Verfahrensvariante setzt also ein natürliches Strahlungsungleichgewicht zwischen der Oberfläche (10) und zumindestens Teilen ihrer Umgebung voraus.

Als Beispiel für diese Verfahrensvariante kann der Brennvorgang eines dentalen Restaurationsteils genommen werden, der sich in kleinen Öfen und in nur wenigen Minuten abspielt. Um die hohen Aufheizgeschwindigkeiten zu realisieren, weisen die Heizwicklungen eine wesentlich höhere Temperatur als das dentale Brenngut auf, die durch die Heizwicklungen emittierte und auf das Brenngut einstrahlende Fremdstrahlung (14) weist also einen höheren und intensiveren Anteil an kurzwelliger Strahlung auf, ein Teil dieser Strahlung wird reflektiert und gelangt als Teil der Strahlung (13) zum Detektor (16). Allerdings ist bei dieser Arbeitsweise die Detektion einer Reaktion nur dann möglich, wenn die Temperaturen im Ofen konstant sind oder sich in stetiger Weise ändern, denn jede plötzliche Änderung der Zeit-Temperatur-Kurve erzeugt ebenfalls eine Unstetigkeit der Strahlungsintensi-Die Erfindung betrifft ein Verfahren zur optischen Kontrolle des Verlaufs eines auf einer Oberfläche eines Körpers erfolgenden physikalischen und/oder chemischen Prozesses, gemäß dem Oberbegriff von Anspruch 1, bei dem von einem Teil der Oberfläche ausgehende Oberflächenstrahlung mit Hilfe einer Messvorrichtung, insbesondere eines Sensors, gemessen wird sowie eine Vorrichtung gemäß dem Anspruch 10.

Ein Verfahren zur Charakterisierung eines Sinterzustandes von Keramiken im Produktionsofen ist aus der Druckschrift DE 103 41 491 B3 bekannt. Dabei wird ein Werkstück mit einem fokussierenden Lichtstrahl beleuchtet, wobei um die beleuchtete Stelle ein heller Fleck entsteht, bei dem die Strahlendichte der emittierten Strahlung mit wachsendem Abstand von der beleuchteten Stelle abnimmt. Der um die beleuchtete Stelle herum entstehende helle Fleck ist dabei umso größer, je weiter der Sinterprozess fortgeschritten ist. Durch ein ortsaufgelöstes Messen der Strahldichte um den beleuchteten Fleck herum lässt sich so eine Aussage über den Fortgang des Sinterprozesses machen.

Dazu werden thermisch aktivierte Prozesse in ihrem Ablauf in der Regel durch fortlaufende Beobachtung der Temperatur und entsprechende Anpassung der Ofenleistung gesteuert. Als typisches Beispiel eines solchen Prozesses sei das Sintern in einem Brennofen, insbesondere in einem Dentalbrennofen, genannt, bei dem eine keramische Masse möglichst perfekt gebrannt werden soll. Dies geschieht meist unter Verwendung einer im Rahmen zahlreicher Versuche ermittelten Zeit-Temperatur-Kurve, denn ein optimales Brennergebnis ist innerhalb bestimmter Grenzen mit verschiedenen Kombinationen der Parameter Zeit und Temperatur erreichbar. Dabei kommt der Messung der Temperatur besondere Bedeutung zu, denn in Abwesenheit einer direkten Kontrolle des Sinterfortschritts kann ein optimales Ergebnis nur bei genauester Einhaltung der Temperatur-Zeit-Kurve erzielt werden.

Die Kontrolle des Sintererfolgs geschieht meist erst nach Abschluss des Brennprozesses, also zu einem Zeitpunkt, zu dem

Reduktion der Ofenleistung verursachte Änderung der Abstrahlung der Heizelemente hervorgerufene Unstetigkeit überlagert und kann nicht mehr exakt verfolgt werden.

Bei einer zweiten bevorzugten Variante des erfindungsgemäßen Verfahrens wird deshalb Fremdstrahlung (141) einer Strahlungsquelle (15) auf die Oberfläche (10) des Körpers (11) projiziert, deren reflektierter Anteil dann in gleicher Weise wie oben beschrieben als Teil der Strahlung (13) zum Detektor (16) gelangt. Die Wellenlänge dieser Fremstrahlung (141) wird dabei mit Vorteil in einem Bereich gewählt, der in der natürlichen Eigenstrahlung der Oberfläche (10) nur in geringem Maße oder gar nicht vorkommt, der Detektor (16) wird mit seinem Empfindlichkeitsmaximum ebenfalls im Wellenängenbereich der Fremdstrahlung (141) gewählt, sodass praktisch nur die Intensitätsänderung des von der Oberfläche (10) reflektierten Anteils der Fremdstrahlung (141) vom Detektor (16) wahrgenommen wird. Für thermisch aktivierte Prozesse heißt dies, dass die Wellenlänge der Strahlungsquelle (15) bevorzugt in einem wesentlich höheren Temperaturbereich gewählt werden sollte, als der Temperatur der Oberfläche (10) und ihrer Umgebung entspricht, also z.B. im Bereich des Blaulichts oder sogar im Bereich des nahen UV. Wird in einem solchen Fall ein breitbandiger Detektor gewählt, der auch Anteile im Rotlicht- oder im IR-Bereich des Spektrums wahrnimmt, so kann die Strahlung (13) mit Vorteil durch einen Filter geschickt werden, welcher die langwelligere Strahlung eliminiert, sodass nur diejenigen Änderungen der Strahlungsintensität vom Detektor (16) wahrgenommen werden, welche auf reaktionsbedingte Änderungen des Emissionsgrads und/oder der Topographie der Oberfläche (10) zurückgehen.

Beiden Verfahrensvarianten liegt also derselbe zentrale Kern des erfindungsgemäßen Gedankens, die Nutzung eines Strahlungsungleichgewichts, zugrunde, d.h. die Messung des Anteils der von der Oberfläche (10) reflektierten Fremdstrahlung innerhalb der von dieser Oberfläche ausgesandten Strahlung (13) mit dem Detektor (16). Bei der ersten Variante werden im Umkreis der Oberfläche vorhandene natürlich vorhandene Oberflächen als Quellen für Fremdstrahlung verwendet, bei der zweiten Variante wird dieselbe Aufgabe durch eine bewusst gewählte Strahlungsquelle (15) erfüllt. Der Vorteil der zweiten Verfahrensvariante ist nicht nur, dass Temperaturmessung und Wahrnehmung des Ablaufs einer chemischen und/oder physikalischen Reaktion messtechnisch völlig trennbar sind, sondern dass auch in Fällen der Hohlraumstrahlung, also z.B. in einem Ofen, in dessen Innenraum völlig homogene Temperaturverhältnisse herrschen, dieses Strahlungsgleichgewicht durch die Fremdstrahlung (141) der Strahlungsquelle (15) in Bezug auf die Oberfläche (10) außer Kraft gesetzt wird.

In einer weiteren vorteilhaften Ausgestaltung ist es vorgesehen, dass die Strahlung (13) von mehreren in Form einer Pixelmatrix angeordneten Sensoren gemessen wird, wobei jeder dieser Sensoren einen Teil der von einem Teil der Oberfläche (10) ausgehenden Strahlung (13) in Form einer Intensitätskurve wiedergibt und eine Unstetigkeit dieser Kurve im bisher beschriebenen Sinn über Änderungen des Emissionsgrades und/oder der Topographie dieses Teils der Oberfläche (10) eine Information über den Ablauf eines sie verursachenden physikalischen und/oder chemischen Prozesses gibt, wobei durch Kombination der unterschiedlichen Kurvenverläufe benachbarter Pixel zusätzliche Informationen gewonnen werden, welche vorwiegend über Änderungen der Topographie der Fläche (10) Auskunft geben.

In vorteilhafter Ausgestaltung der Erfindung ist es vorgesehen, einen Probenkörper mit definierter Geometrie zu verwenden. Ein solcher Probenkörper kann beispielsweise ein Spitzkegel sein, dessen Spitze sich unter dem Einfluss der Verflüssigung sowie der Oberflächenspannung zunehmend verrundet. Auch Segerkegel lassen sich verwenden, die in der keramischen Brenntechnik als Normproben an sich bekannt sind. Erfindungsgemäß lässt sich beobachten, wie die Partikel von pulverförmigen Proben oder Grünkörpern in einer ersten Phase an Kontaktstellen mit Nachbar-Partikeln in einer ersten Phase unter dem Einfluss der Oberflächendiffusion Sinterhälse ausbilden. Übliche Verfahren der Sinterkontrolle, z.B. die Dilatometrie, können diese erste Phase kaum wahrnehmen, da sie von einer kaum messbaren Volums- bzw. Längenänderung des Probenkörpers begleitet ist, das erfindungsgemässe Verfahren zeigt jedoch bereits in dieser Phase eine deutliche Änderung der optischen Eigenschaften der Oberfläche. In einer zweiten Phase, die von deutlichen Volumsänderungen begleitet ist, kommt es dann über den Prozess der Volumsdiffusion zu einer zunehmenden Koagulation der Partikel, wobei gleichzeitig das Hohlraumvolumen abnimmt. Ein optisches Dilatometer kann den Prozess in dieser Phase über die ihn begleitende Längenveränderung auch verfolgen, jedoch benötigt sie zu diesem Zweck eine idealisierte Probe definierter Grösse und Kontur, während das erfindungsgemässe Verfahren an einer beliebigen Oberfläche des eigentlichen Brennguts eingesetzt werden kann.

Die zunehmende Beweglichkeit der Atome und Moleküle führt im Mikrobereich dazu, dass sich die anfänglich von den ursprünglichen Partikeln bestimmte raue Oberflächentopographie über den Einfluss der Oberflächenspannung im Bestreben nach einer Minimalisierung der Oberfläche glättet, was ihr Spiegelungsvermögen erhöht. Die Oberflächenspannung ist jedoch bei längeren Zeiten auch im makroskopischen Bereich wirksam, d.h. ein Probenkörper mit vorgegebener spitzwinkliger Geometrie wird seine zunehmend glatter und damit reflektionsfähiger werdende Spitze mit der Zeit zu einer rundlichen Form abstumpfen, neben den primären Einfluss der Änderung der Reflektivität der einzelnen Oberflächenelemente ändern sich also gleichzeitig aufgrund der makroskopischen Topographieveränderung auch die Abstrahlungswinkel dieser Strahlung, was durch die relative Veränderung der Intensitätskurven benachtbarter Pixel einer Detektormatrix zur Kennzeichnung des Brennverlaufs verwendet werden kann, in Analogie z.B. zum Absinken von Segerkegeln oder zur in der keramischen Technik üblichen Bestimmung des Halbkugelpunktes. fläche empfangene Strahlungsmenge hängt also einerseits vom Emissionsvermögen und über den Einfluss der Richtungsabhängigkeit auch noch von der Topographie dieser Oberfläche ab.

Die Verhältnisse des Schwarzen Körpers können in der Praxis annähernd durch das Konzept eines Hohlraumstrahlers erfüllt werden. Dies ist ein allseitig umschlossener Raum gleicher Temperatur, in den keine Fremdstrahlung eindringt, d.h. es herrscht ein Gleichgewicht zwischen absorbierter und emittierter Strahlung. Solche Verhältnisse herrschen z.B. annähernd in gut wärmeisolierten Sinteröfen, in denen die Temperatur nur langsam geändert wird, d.h. Ofeninhalt, Heizelemente und Ofenwände besitzen annähernd gleiche Temperaturen, der Emissionsgrad beträgt unter solchen Verhältnissen praktisch 1. Dies ist ideal für eine exakte optische Temperaturmessung, denn Änderungen der optischen Eigenschaften und/oder der Topographie einer in einem solchen Raum befindlichen Fläche wirken sich nicht mehr auf deren Strahlungsverhalten aus.

Ausgehend von den dargelegten Nachteilen sowie unter Würdigung des aufgezeigten Standes der Technik bei Verfahren der eingangs genannten Art liegt der vorliegenden Erfindung daher die Aufgabe zugrunde, ein Verfahren gemäß dem Oberbegriff von Anspruch 1 sowie eine Vorrichtung gemäß dem Oberbegriff von Anspruch 17 so auszubilden, dass auch solche Prozesse optisch detektiert werden können, bei denen kein Wärmeaustausch stattfindet, mit dem z.B. ein Schmelz- oder Erstarrungsprozess über den dabei auftretenden Haltepunkt detektiert wird, darüber hinaus sollen auch Prozesse unter den Bedingungen der Hohlraumstrahlung erfasst werden können, also etwa ein Sinterprozess, in dem die Charge mit dem Ofen praktisch im Temperaturgleichgewicht steht.

Diese Aufgabe wird erfindungsgemäß durch Anspruch 1 in Bezug auf eine Verfahren und durch Anspruch 10 in Bezug auf eine Vorrichtung zur Durchführung des Verfahrens gelöst. Vorteilhafte Weiterbildungen ergeben sich aus den Unteransprüchen.

Gemäss der Erfindung wird Fremdstrahlung (14) auf die Oberfläche (10) eingestrahlt, wobei Änderungen des Emissionsgrades und/oder

In einer weiteren vorteilhaften Ausgestaltung ist es vorgesehen, dass der physikalische und/oder chemische Prozess im Rahmen einer Phasenumwandlung erfolgt.

In einer weiteren vorteilhaften Ausgestaltung ist es vorgesehen, dass der physikalische und/oder chemische Prozess im Rahmen von Wärmebehandlungen und/oder thermochemischen Prozessen erfolgt.

In einer weiteren vorteilhaften Ausgestaltung ist es vorgesehen, dass die Messung der Temperatur von Bereichen der Oberfläche gemessen wird, wobei die Messung mittels eines spannungs- oder strombildenden Verfahrens, insbesondere eines Thermoelements oder temperaturabhängigen Widerstands erfolgt.

In einer weiteren vorteilhaften Ausgestaltung ist es vorgesehen, dass die Messung der Temperatur von Bereichen der Oberfläche mittels eines optischen Verfahrens, insbesondere eines Quotientenpyrometers erfolgt, wobei der Intensitätsverlauf mindestens einer der Wellenlängen des Quotientenpyrometers für die Messung des der Strahlungsintensität des Prozesses und die Kombination von Intensitäten der der Messwerte beider Wellenlängen des Quotientenpyrometers in üblicher Weise zur Bestimmung der Temperatur herangezogen wird.

In einer weiteren vorteilhaften Ausgestaltung ist es vorgesehen, dass der Prozess im Rahmen eines Sinterprozesses erfolgt, bei dem es sich um einen in einem dentalen Brennofen stattfindenden Brennprozess handelt.

In einer weiteren vorteilhaften Ausgestaltung ist es vorgesehen, dass eine Messeinrichtung, insbesondere ein Sensor, zu einem Bereich der Oberfläche beabstandet ist.

In einer weiteren vorteilhaften Ausgestaltung ist es vorgesehen, dass zusätzlich zur Messeinrichtung, insbesondere von ihr beabstandet, eine Strahlungsquelle von einem Bereich der Oberfläche beabstandet ist und insbesondere mit ihrer optischen Achse zu ihr ausgerichtet ist.

In einer weiteren vorteilhaften Ausgestaltung ist es vorgesehen, dass die Messeinrichtung ein optischer Sensor oder eine Matrix von Sensoren ist.

In einer weiteren vorteilhaften Ausgestaltung ist es vorgesehen, dass die Messeinrichtung eine fokussierende Optik aufweist.

In einer weiteren vorteilhaften Ausgestaltung ist es vorgesehen, dass die Strahlungsquelle eine Lichtquelle wie beispielsweise eine Lampe mit mehr oder weniger breitem Wellenlängenbereich, bevorzugt eine LED, eine Halogenlampe oder ein Laser ist.

In einer weiteren vorteilhaften Ausgestaltung ist es vorgesehen, dass die Messeinrichtung und die Strahlungsquelle optische Achsen aufweisen, die derart angeordnet sind, dass die Reflexion der Strahlung maximal von der Messeinrichtung wahrgenommen wird.

In einer weiteren vorteilhaften Ausgestaltung wird polarisierte Strahlung verwendet, indem das Licht der Strahlungsquelle vor dem Auftreten auf die Probenfläche durch einen Polfilter polarisiert wird, und wobei das von der Probenoberfläche reflektierte Licht durch einen drehbaren Polfilter als Analysator zum Detektor gelangt, wobei das polarisierte Licht in bekannter Weise zur Identifikation von optisch aktiven Substanzen verwendet werden kann.

In einer weiteren vorteilhaften Ausgestaltung ist es vorgesehen, dass die Messeinrichtung und die Strahlungsquelle auf einer gemeinsamen Haltevorrichtung angeordnet sind, wobei sowohl die Messeinrichtung als auch die Strahlungsquelle zumindest in einer Richtung, bevorzugt in der Ebene, welche durch ihre beiden optischen Achsen bestimmt wird, bewegbar ist.

In einer weiteren vorteilhaften Ausgestaltung ist es vorgesehen, dass sich im Strahlengang der Messeinrichtung ein semipermeabler Spiegel befindet, mit dem die Strahlung in die optische Achse der Messeinrichtung einblendbar ist.

In einer weiteren vorteilhaften Ausgestaltung ist es vorgesehen, dass die Messeinrichtung und/oder die Strahlungsquelle Bestandteile eines Ofens sind, wobei die Messung der Strahlung und der Oberflächenstrahlung durch eine Öffnung des Ofens erfolgt, die bevorzugt mit einem für die Strahlung und Oberflächenstrahlung durchlässigen Fenster versehen ist.

In einer weiteren vorteilhaften Ausgestaltung ist es vorgesehen, dass die Halterung in mindestens einer Raumrichtung beweglich ist.

Weitere Vorteile, Einzelheiten und Merkmale der Erfindung ergeben sich aus der nachfolgenden Beschreibung der Ausführungsbeispiele der Erfindung anhand der Zeichnungen.

Es zeigen:

Fig. 1           eine schematische Darstellung der ersten Ausführungsform des erfindungsgemäßen Verfahrens, welche speziell für Öfen geeignet ist, in denen kein thermisches Gleichgewicht zwischen Ofenwandungen und Charge herrscht;

Fig. 2a       eine schematische Darstellung des zeitlichen Verlaufs der Strahlungsintensität einer Oberfläche im Laufe einer Aufheizung in einem Ofen entsprechend Fig. 1, bei der zu einem bestimmten Zeitpunkt eine chemische und/oder physikalische Umwandlung eintritt;

Fig. 2b       eine schematische Darstellung des Verlaufs der ersten Ableitung der in Fig. 2 gezeigten Kurven der Strahlungsintensität;

Fig. 2c       eine schematische Darstellung des Verlaufs der zweiten Ableitung der in Fig. 2 gezeigten Kurven der Strahlungsintensität;

Fig. 3a       eine schematische Darstellung der zweiten Ausführungsform des erfindungsgemäßen Verfahrens mit Strahlungsquelle (15), die auf eine Oberfläche mit rauher Topographie einstrahlt;

Fig. 3b       eine schematische Darstellung der zweiten Ausführungsform des erfindungsgemäßen Verfahrens mit Strahlungsquelle (15), die auf eine glatte Oberfläche einstrahlt;

Fig. 3c       eine schematische Darstellung der zweiten Ausführungsform des erfindungsgemäßen Verfahrens mit Strahlungsquelle (15) und einem Kollimator (151);

Fig. 4a       eine schematische Darstellung einer Modifikation der zweiten Ausführungsform des erfindungsgemäßen Verfahrens und direkter Einstrahlung der Strahlungsquelle (15) auf die Oberfläche (10) unter Verwendung eines semipermeablen Spiegels (17);

Fig. 4b    eine schematische Darstellung einer Modifikation der zweiten Ausführungsform des erfindungsgemäßen Verfahrens unter Benützung eines Kollimators (151);

Fig. 5    eine schematische Darstellung einer dritten Ausführungsform des erfindungsgemäßen Verfahrens mit beweglicher Detektoreinheit;

Fig. 6    eine schematische Darstellung des zeitlichen Verlaufs der Strahlungsintensität einer Oberfläche im Laufe einer Aufheizung in einem Ofen entsprechend Fig. 3a - 3c, bei der zu einem bestimmten Zeitpunkt eine chemische und/oder physikalische Umwandlung eintritt;

Fig. 7a    eine schematische Darstellung einer Modifikation der zweiten Ausführungsform des erfindungsgemäßen Verfahrens zu Beginn eines Sinterprozesses;

Fig. 7b    eine schematische Darstellung einer Modifikation der zweiten Ausführungsform des erfindungsgemäßen Verfahrens bei Ende eines Sinterprozesses;

Fig. 8a    eine schematische Darstellung einer Modifikation der zweiten Ausführungsform des erfindungsgemäßen Verfahrens mit mehreren als Pixelmatrix angeordneten Detektoren bei anfänglich grosser Rauheitstiefe einer Oberfläche;

Fig. 8b    eine schematische Darstellung der Ausführungsform gemäss Fig. 8a bei reduzierter Rauheitstiefe einer Oberfläche;

Fig. 8c    eine schematische Darstellung der Ausführungsform gemäss Fig. 8a bei glatter und unter dem Einfluss der Oberflächenspannung zunehmend eingeebneter Fläche;

Fig. 8d    eine schematische Darstellung der Intensitätskurven der Detektoren einer Pixelmatrix während der Änderungen der Oberfläche entsprechend Fig. 8a - 8c;

Fig. 9    eine schematische Darstellung einer Modifikation der zweiten Ausführungsform des erfindungsgemäßen Verfahrens unter Verwendung von zwei Strahlungsquellen unterschiedlicher Wellenlänge;

Fig. 10    Transmissivität von Quarzglas und Silikaten im UV-Bereich in Funktion der Wellenlänge;

Fig. 11    eine schematische Darstellung einer Modifikation der zweiten Ausführungsform des erfindungsgemäßen Verfahrens unter Verwendung von optischen Filtern;

Fig. 12    Eine schematische Darstellung einer Modifikation der zweiten Ausführungsform des erfindungsgemäßen Verfahrens unter Verwendung eines Lichtwellenleiters;

Fig. 13    Eine schematische Darstellung einer Modifikation der zweiten Ausführungsform des erfindungsgemäßen Verfahrens unter Verwendung von zwei Lichtwellenleitern.

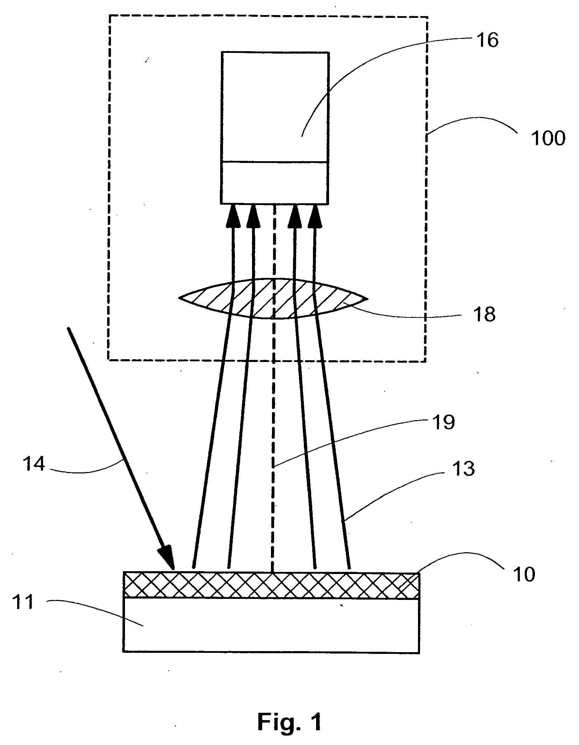

Fig. 1 zeigt ein Verfahren zur optischen Kontrolle des Verlaufs eines auf der Oberfläche 10 eines Körpers 11 erfolgenden physikalischen und/oder chemischen Prozesses, bei dem ein Teil der auf die Oberfläche 10 eingestrahlten Fremdstrahlung 14 reflektiert und zusammen mit der temperaturgemässen Eigenstrahlung der Oberfläche 10 als Strahlung 13 über ein fokussierendes Linsensystem entlang der optischen Achse 19 zur Messvorrichtung 16 in Form eines Sensors gelangt.

Im allgemeinsten Fall kann die Fremdstrahlung 14 von einer oder mehreren Körpern der Umgebung der Fläche 10 ausgehen, wichtig ist nur, dass diese Fremdstrahlung eine vom temperaturgemäßen Eigenspektrum der Fläche 10 abweichende Charakteristik hat, damit die Veränderung des von ihr reflektierten Anteils der Fremdstrahlung 14 als Änderung der Gesamtstrahlung 13 wahrgenommen werden kann.

Als Beispiel kann die Oberfläche 10 zu einem Körper gehören, der in einem Ofen gesintert werden soll, bei der Messeinrichtung 16 kann es sich um einen IR-Sensor handeln, wie er z.B. auch für die Zwecke der Temperaturmessung eingesetzt wird, indem er z.B. die Strahlungsintensität in einem Wellenlängenbereich misst.

Für das Beispiel wird angenommen, dass der Ofen mit stetiger Geschwindigkeit aufgeheizt wird. Um eine ausreichende Aufheizgeschwindigkeit zu erzwingen, muss das Heizelement des Ofens daher immer eine um ein bestimmtes Mass höhere Temperatur aufweisen, wodurch die von ihm ausgesandte Fremdstrahlung 14 ein zu kürzeren Wellenlängen verschobenes Strahlungsspektrum aufweist. Ein normaler keramischer oder metallischer Grünkörper bildet ein Haufwerk lose gebundener Partikel mit einer Vielzahl von Mikroflächen, die in verschiedene Raumrichtungen geneigt sind, dies führt zu einem niedrigen Emissionsgrad, d.h. einfallende Fremdstrahlung 14 wird diffus gestreut, wie dies allgemein für ungebrannte Keramik der Fall ist, deren Emissionsgrad in der Grössenordnung von 0.6 - 0.8 liegt. Obwohl der Einfallswinkel der heisseren Fremdstrahlung in Fig. 1 zu einem Ausfallswinkel führt, welcher am Detektor vorbeiführen würde, gelangt über die starke Streuwirkung der ungesinterten Oberfläche 10 trotzdem eine grösserer Anteil diffus reflektierter Strahlung zur Messvorrichtung 16, was dazu führt, dass die von ihr wahrgenommene Strahlungsintensität höher liegt als dies der Eigentemperatur der Oberfläche 10 entsprechen würde. Dies ist eine Situation, bei der die normalen optischen Temperaturmessverfahren versagen, für das erfindungsgemäße Verfahren ist dieser Effekt jedoch wesentlich und vorteilhaft.

Während des ersten Teils der Aufheizung nimmt die von der Messeinrichtung 16 wahrgenommene Strahlungsintensität infolge der stetigen Temperaturzunahme der Heizwicklung und auch der Oberfläche 10 stetig zu, in dem Moment, wo es zur Ausbildung von Sinterhälsen kommt, d.h. benachbarte Partikel beginnen unter dem Einfluss der Oberflächendiffusion miteinander zu verschweißen und scharfe Kanten werden unter dem Einfluss der Oberflächenspannung zunehmend geglättet, kommt es zu einer Abnahme der Streuwirkung und des Emissionsgrades. Dadurch wird ein zunehmender Teil der Fremdstrahlung an der Messeinrichtung 16 vorbei reflektiert, was sich in einer plötzlich einsetzenden Senkung der Intensität 13 manifestiert, welche als Unstetigkeit wahrgenommen werden kann.

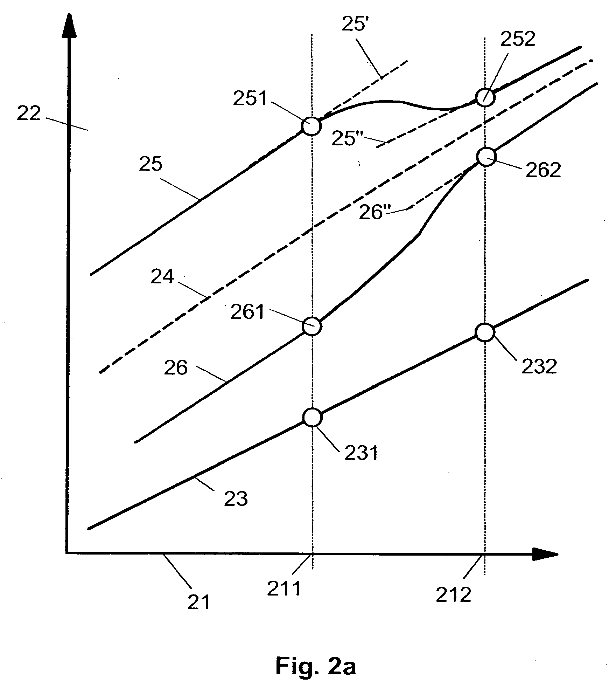

Fig. 2a zeigt eine schematische Darstellung des zeitlichen Verlaufs der unter solchen Bedingungen gemessenen Strahlungsintensität. Dabei bezeichnet 21 die Zeitachse und 22 die Achse der Intensität der über eine Messvorrichtung bestimmten Strahlung der Oberfläche 10, welche in diesem Beispiel entsprechend der Temperaturkurve 23 gleichmässig erwärmt wird. Die Kurve 24 zeigt den hypothetischen Verlauf der Intensität eines Schwarzen Körpers, deren Verlauf nur von der Temperatur beeinflusst wird und deren Verlauf deshalb ähnlich stetig wie derjenige der Temperaturkurve 23 ist.

Die Kurve 25 zeigt den Verlauf der Strahlungsintensität eines grauen Körpers, welcher sich - wie in Fig. 1 beschrieben - in einem vorwiegend heisseren Umfeld befindet, wobei angenommen wird, dass es sich bei diesem Körper um eine ungesinterte keramische Masse handelt. Eine solche Masse hat einen hohen Emissionsgrad z.B. im Bereich von 0.8, sie liegt also nahe beim Verhalten des Schwarzen Körpers und spiegelt deshalb nur in geringem Masse. Dieses geringe Reflexionsvermögen führt aber bei der wesentlich höheren Temperatur des Umfeldes dazu, dass über die Streuwirkung der Oberfläche 10 eine beträchtliche zusätzliche Strahlungsmenge zur Messvorrichtung 16 reflektiert wird, was sich dadurch zeigt, dass die Kurve 25 bis zum Punkt 251 annähernd parallel oberhalb der Kurve 24 für den Schwarzen Körper verläuft.

Beim Punkt 251 kommt es zu einer zunehmenden Abweichung der Kurve 25 von der Kurve 25', welche aufgrund des regressierten Kurvenverhaltens vor dem Punkt 251 konstruiert wurde, die Kurve 25' kann jedoch auch als Tangente, d.h. erste Ableitung der Funktion 25 im Punkt 251 betrachtet werden. In diesem Sinne kann der Punkt 251 auch in üblicher Weise bestimmt werden, indem man die erste und/oder zweite Ableitung der regressierten Kurvenfunktion verwendet. Die negative Abweichung der Kurve nach dem Punkt 251 zum Zeitpunkt 211 zeigt, dass der Emissionsgrad sich zu niedrigeren Werten verschiebt, was mit dem grösser werdenden Reflexionsvermögen der zunehmend versinternden Fläche 10 zusammenhängt.

Damit kann der Beginn des Sinterprozesses auf den Zeitpunkt 211 bzw. die Temperatur 231 festgelegt werden.

In dem Maße, in dem der Sinterprozess mit zunehmender Zeitdauer und ansteigender Temperatur fortschreitet, kommt es zu einer weiteren Absenkung des Emissionsgrades, was eine weitere Senkung der Strahlungsintensität der Kurve 25 zur Folge hat. Beim Punkt 252 mündet die Kurve 25 wieder in einen stetigen Verlauf ein, der fast nur noch von der Temperatur beeinflusst wird. Der Punkt 252 kann analog zum Punkt 251 bestimmt werden, indem man das nach dem Zeitpunkt 212 entstandene Kurvenstück in Form der Kurve 25" rückwärts extrapoliert bzw. die Tangente der Funktion im Punkt 252 anlegt. Der Punkt 252 zeigt also die Rückkehr zu einem fast konstanten Emissionsverhalten und damit ist der Zeitpunkt 212 bzw. die Temperatur 232 gefunden, wo der Brennprozess zu einem homogenen Produkt geführt hat.

Bei längeren Zeiten oberhalb des Zeitpunkts 212 bzw. oberhalb der Temperatur 232 kommt es zu einer zunehmenden Annäherung der Kurve 25 an die hypothetische Kurve 26 des schwarzen Körpers. Dies hat nichts mit einer Veränderung des Emissionsvermögens der Fläche 10 zu tun, sondern ergibt sich aus der Tatsache, dass es bei längeren Zeiten und Temperaturen zunehmend zu einem Ausgleich zwischen der Temperatur der Probe sowie den kälteren und wärmeren Zonen der Ofenwandung kommt, wodurch die Situation einer Hohlraumstrahlung angenähert wird, welche dem idealen Verhalten des Schwarzen Körpers entspricht.

Die Kurve 26 entspricht den Verhältnissen in einem Ofen, in dem die Fläche 10 nur von kälteren Körpern umgeben ist, die Fremdstrahlung 14 enthält also Strahlung, welche in ihrem Spektrum zu längeren Wellenlängen und geringerer Intensität verschoben ist, demgemäss liegt auch der Verlauf der Kurve 26 unterhalb desjenigen der Kurve 24, welche das Verhalten des von der Umgebung unbeeinflussten Schwarzen Körpers beschreibt. Beim Punkt 261 setzt der Sinterprozess ein, im Gegensatz zum vorherigen Beispiel wird jetzt aber angenommen, dass ein zunehmender Anteil der energiereicheren Strahlung 13 zum Detektor gelangt, was zu einem Anstieg der Kurve 26 führt.

Würde derselbe Sinterprozess in einem langsam aufgeheizten Ofen durchgeführt, bei dem die Temperatur von Ofen und Charge, d.h. der Ofenwände und des Körpers 11 während des Aufheizungsprozesses fast identisch wäre, dann würde von Anfang an ein nahezu perfektes Strahlungsgleichgewicht existieren, wodurch die Kurven des grauen Körpers 25 und 26 immer nahe oberhalb und unterhalb der Kurve 24 für den Schwarzen Körper liegen würden. In einem solchen Fall würde eine durch einen chemischen und/oder physikalischen Prozess ausgelöste Änderung des Emissionsgrades der Oberfläche 10 sich nur wenig oder gar nicht in der Kurve 25 und 26 manifestieren.

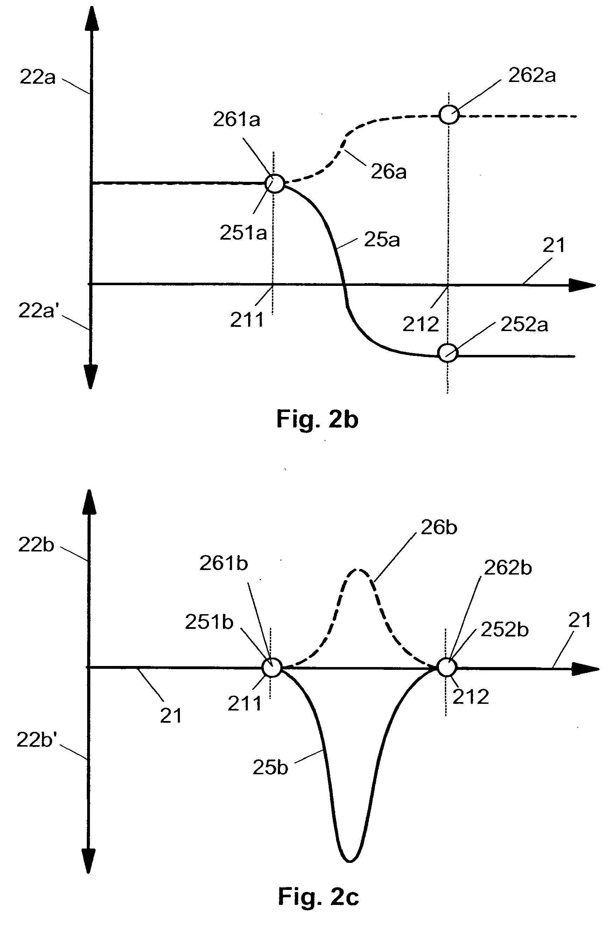

Fig. 2b zeigt die ersten Ableitungen 25a und 26a der Kurven 25 und 26 von Fig. 2a, die reaktionsbedingten Unstetigkeiten 251a und 261a zu Beginn und 252a und 262a zu Ende des Sinterprozesses sind in dieser Darstellung wesentlich besser zu sehen, da der Einfluss der wechselnden Temperaturverhältnisse nicht mehr dominant ist.

Fig. 2c zeigt die zweite Ableitungen 25b und 26b der Kurven 25 und 26 aus Fig. 2a, hier ist der Temperatureinfluss völlig ausgeblendet und die Reaktion wird in anschaulicher Weise durch den beim Zeitpunkt 211 mit den Punkt 251b und 261b beginnenden und den beim Zeitpunkt 212 mit den Endpunkten 252b und 262b endenden Peaks markiert. Der Scheitelpunkt dieser Peaks entspricht dem Maximum der optischen Änderungsgeschwindigkeit der Oberfläche 10.

Bei den bisher besprochenen Prozessen und den aus ihnen resultierenden Kurven wurde bisher beispielshaft angenommen, dass es sich um einen Sinterprozess handelt, der naturgemäss infolge der sich zunehmend glättenden Oberfläche zu einer Senkung des Emissionsgrads führt. Es sind jedoch auch Prozesse denkbar, bei denen das Verhalten der Oberfläche genau umgekehrt ist, z.B. bei der Nitrierung einer Metalloberfläche im Rahmen einer thermochemischen Beschichtung. Hier besitzt die anfänglich glänzende Oberfläche einen niedrigen Emissionsgrad, z.B. in der Größenordnung von 0.05 - 0.15, der sich nach Bildung der ersten Nitrierschicht zu höheren Werten verschiebt.

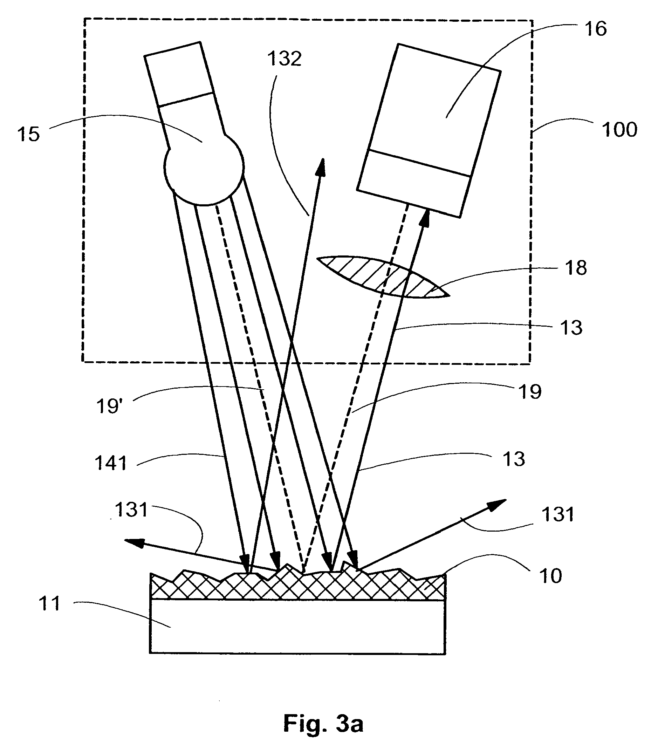

Fig. 3a zeigt die zweite Variante des erfindungsgemäßen Verfahrens, welches es gestattet, das Verfahren auch in einem nahezu im thermischen Gleichgewicht befindlichen Ofen zur Anwendung zu bringen. Dabei projiziert eine Lichtquelle als Strahlungsquelle 15, vorzugsweise eine Lampe, welche seitlich der Messvorrichtung 16 ausserhalb oder peripher an der Ofenwand befestigt ist, Fremdstrahlung in Form des Strahlenbündels 14 auf die Oberfläche 10 des Körpers 11, welche in diesem Stadium eine komplexe Topographie aufweist. Die Wellenlänge oder der Wellenlängenbereich der Strahlung 14 wird dabei mit Vorteil so gewählt, dass sie einem Bereich geringer Intensität innerhalb des Spektrums der natürlichen Temperaturstrahlung der Oberfläche 10 entspricht. Im Sinne eines konkreten Beispiels soll z.B. ein Sinterprozess im Temperaturbereich von 700 - 1000°C beobachtet werden. Für eine solche Messung könnte der Wellenlängenbereich der Lichtquelle mit Vorteil im Bereich des Blaulichts, z.B. nahe bei 400 nm gewählt werden, was einer Temperatur im Bereich oberhalb von 5000 K entspricht.

Auf diese Weise entstehen für die Oberfläche 10 Verhältnisse, wie sie in einem im Temperaturungleichgewicht befindlichen Ofen vorherrschen, die Lichtquelle 15 übernimmt quasi die Rolle von Ofenwandungen mit beträchtlich höherer Temperatur. Der von der Messvorrichtung 16 wahrgenommene Intensitätsverlauf ist dann ähnlich wie der Verlauf der Kurve 25 in Fig. 2.

Die Strahlung 14 der Strahlungsquelle 15 wird bei der Ausführungsform gemäß Fig. 3a mit einem bestimmten Anstellwinkel auf die Oberfläche 10 projiziert und von dieser über eine Fokussierungsoptik 18 zusammen mit der Oberflächenstrahlung 13 auf der Oberfläche 10 der in Gestalt eines Sensors vorliegenden Messeinrichtung 16 zugeführt. Die Strahlungsquelle 15 und die Messeinrichtung 16 bilden die Vorrichtung 100. Die Wellenlänge der Strahlungsquelle 15 ist möglichst exakt auf den höchsten Empfindlichkeitsbereich der Messeinrichtung 16 abgestimmt. Zudem wird gemäß dem Verfahren eine Wellenlänge gewählt, die bei der Messtemperatur im Strahlungsspektrum der Oberflächenstrahlung 13 nur mit geringer Intensität oder gar nicht auftritt. Auch wenn sich der Körper 11 im Zustand einer Hohlraumstrahlung befindet, d. h. wenn Strahlungsgleichgewicht besteht, kann die Änderung des Emissionsfaktors der Strahlung 14 und/oder der Oberflächenstrahlung 13 aufgrund des durch die Strahlung 14 hervorgerufenen Strahlungsungleichgewichts mittels der Vorrichtung 100 ermittelt werden.

Dabei zeigt sich die Wirkung der Topographie der Oberfläche 10, welche nicht mit der mit dem Emissionsgrad verbundenen Streuwirkung zu verwechseln ist. Ein Teil der Strahlung 141 wird entsprechend der örtlichen Neigung der Oberfläche beim Einfallspunkt z.B. in Form der Strahlen 131 und 132 von der Messvorrichtung weggespiegelt, nur der Strahl 13, der infolge der örtlich waagerechten Flächenneigung annähernd parallel zur optischen Achse 19 reflektiert wird, gelangt zum Detektor.

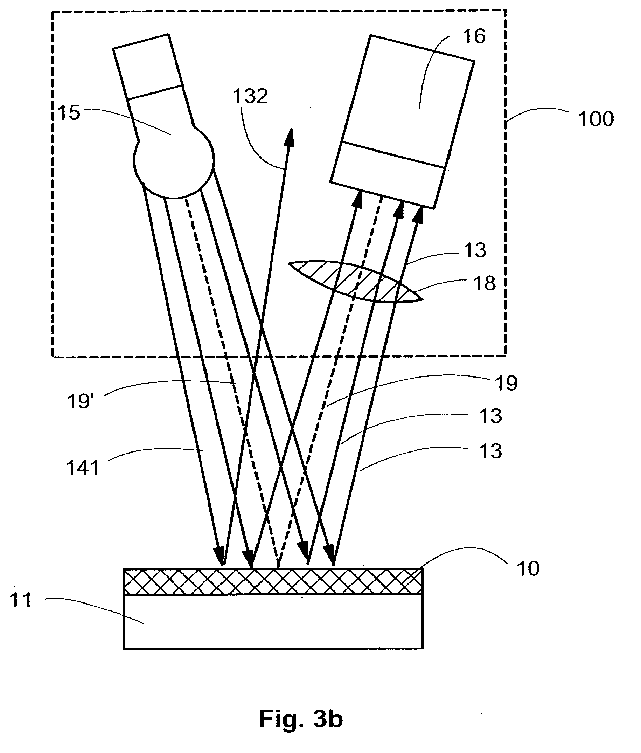

Fig. 3b zeigt dieselbe Anordnung wie in Fig. 3a, jedoch hat sich hier die Oberfläche 10 unter dem Einfluss einer Reaktion zur Waagerechten geglättet, wodurch nur noch ein Teil der Strahlung entsprechend Pfeil 132 an der Messeinrichtung vorbeigeht, der Rest der Strahlung 13 gelangt zum Detektor und wird als Anstieg der Strahlungsintensität von diesem wahrgenommen.

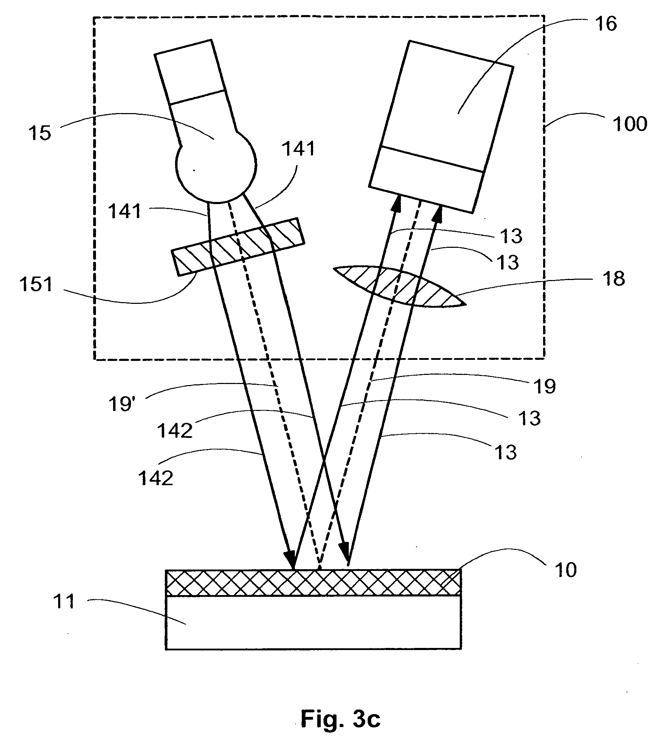

Fig. 3c zeigt dieselbe Situation wie in Fig. 3b gezeigt, jedoch wurde hier ein Kollimator 151 vor die Strahlungsquelle 15 gesetzt, um die divergierende Strahlung 141 zur gerichteten Strahlung 142 zu bündeln. Dementsprechend wird in diesem Beispiel ein grösserer Anteil der Strahlung 142 zur Messeinrichtung reflektiert. Als ein solcher Kollimator können alle in der Optik verwendeten Systeme zur Anwendung kommen, also z.B. eine Lochblende und/oder entsprechende Linsensysteme.

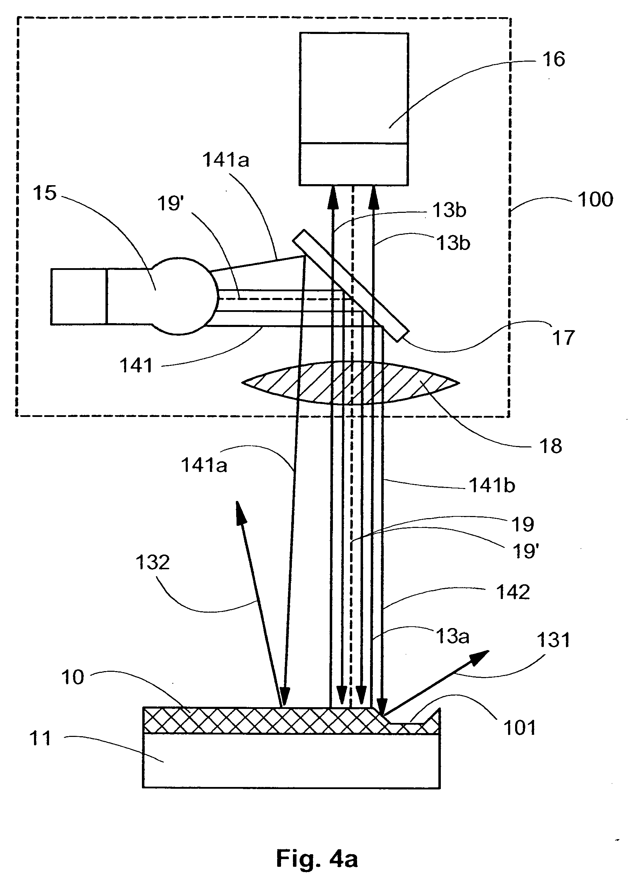

Eine weitere Ausführungsform des erfindungsgemäßen Verfahrens ist in Fig. 4a dargestellt. Die Strahlung 141 der in Form einer Lichtquelle vorliegenden Strahlungsquelle 15 gelangt über einen semipermeablen Spiegel 17 in die Messachse 19 der als Infrarotsensor vorliegenden Messeinrichtung 16 und wird auf die Oberfläche 10 projiziert, wobei die reflektierte Strahlung zusammen mit als Teil der natürlichen Oberflächenstrahlung 13 des Körpers 11 zur Messeinrichtung 16 gelangt.

Ein- und ausfallende Strahlungen erfahren in Bezug auf die Fläche 10 dieselbe Richtung und auch Fokussierung durch die Optik 18. Ein besonderer Vorteil ist dabei auch die Tatsache, dass Lichtquelle 15 und Messvorrichtung 16 in einer gemeinsamen und kompakten Vorrichtung 100 vereint sind, welche ausserhalb oder peripher an der Ofenwand auf eine mindestens in eine Richtung drehbar montiert ist, so dass der Strahlengang 13 zu einem für die Messung optimalen Bereich der Oberfläche 10 bewegt werden kann, sodass beispielsweise die Beobachtung einer in einem Ofen ablaufenden Reaktion durch nur ein Fenster möglich ist. Im Bild ist auch die Wirkung einer lokalen Abweichung der Topographie der Oberfläche 10 gezeigt, d.h. der dort eintreffende Strahl 142 wird an der schrägen Flanke des Kraters 101 in Form des Strahls 131 vom Detektor weggespiegelt. Im Gegensatz dazu wird der Strahl 132 nicht wegen einer lokalen Abweichung der Topographie weggespiegelt, sondern weil er von einem zu stark divergierenden Strahl 141a der Strahlungsquelle 15 stammt.

Bild 4b zeigt dasselbe Ausführungsbeispiel wie Bild 4a, jedoch unter Verwendung eines Kollimators, welcher die Strahlung der Strahlungsquelle 15 bündelt. Aus diesem Grunde werden hier nur noch Strahlen vom Detektor wegreflektiert, welche wie der Strahl 131 durch lokale Abweichungen 101 der Oberfläche 10 beeinflusst werden.

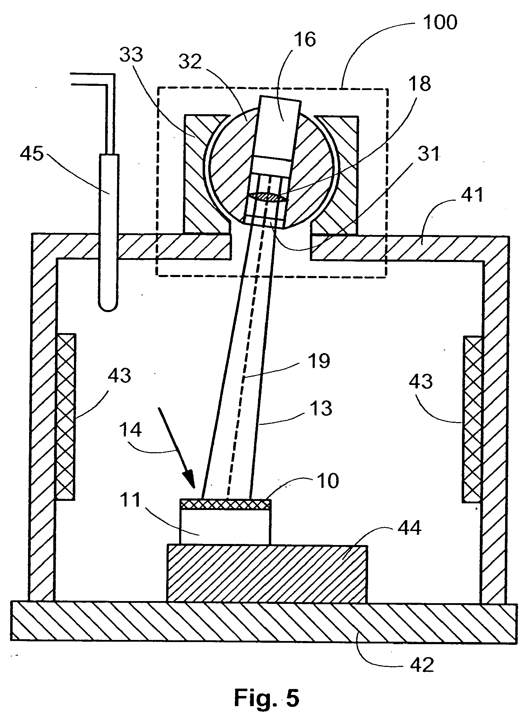

Fig. 5 zeigt eine Vorrichtung entsprechend einer Variante der ersten Ausführungsform des erfindungsgemäßen Verfahrens, welche auf den glockenförmigen Deckel 41 eines Ofens montiert ist, der über einen nicht gezeigten Flansch gegen den Ofenboden 42 dichtet. Die Oberfläche 10 des Körpers 11 befindet sich gegen die Zentralachse des Ofens leicht versetzt auf einem keramischen Trägermaterial 44 im unteren Bereich des Ofens, sie wird von einem mantelförmig an der Wand befestigten Heizelement 43 beheizt. Es ist dies eine Anordnung, wie sie typischerweise in den Öfen zum Brennen von Dentalkeramik vorkommt, der Körper 11 kann im folgenden also auch als stilisierte Teilfläche eines dentalen Brennobjekts aufgefasst werden. Die Temperatur solcher Öfen wird in der Regel über ein Thermoelement 45 gesteuert, welches aus konstruktiven Gründen in der Regel weit vom Körper 10 entfernt angeordnet ist, z.B. nahe der oberen Ofenwandung.

Da die Erwärmung durch ein zylindrisch über einen Teil der Mantelfläche des Ofens ausgedehntes Heizelement 43 in sehr kurzer Zeit erfolgt, hat die am Thermoelement 45 wahrgenommene Temperatur nur mittelbar einen Zusammenhang mit der effektiv am Körper 10 momentan existierenden Temperatur, und eine exakte Zeit-Temperatur-Kurve zur Sicherstellung des Brennerfolgs kann nur mit Hilfe einer empirisch ermittelten Korrelationsfunktion zwischen der Anzeige des Thermoelements und der effektiven Temperatur des Körpers 10 gefahren werden. Im Sinne des erfindungsgemäßen Verfahrens ist dieses Temperatur-Ungleichgewicht jedoch ein Vorteil, denn die starke Bestrahlung der Fläche 11 durch das sie umgebende Heizelement 43 erlaubt eine gute Trennschärfe bei der Bestimmung der Unstetigkeiten der Strahlungsintensitätskurve, wie sie schematisch in Fig. 2 gezeigt ist, sodass die Verfahrensvariante gewählt werden kann, die nur mit der natürlichen Strahlung des Objekts und ohne eine fremde Lichtquelle 15 auskommt.

Dentale Objekte haben naturgemäss eine geringe Ausdehnung und es ist dabei wesentlich, dass die Kontrolle des Brennprozesses an gewünschten Stellen ihrer Oberfläche stattfindet. Detektor 16 und Linsensystem 18 müssen also so gewählt werden, dass sie über die Messdistanz die Kontrolle eines nur kleinen Flächenbereichs der Oberfläche 10 gestatten, z.B. einen Durchmesser von 1 - 2 mm. Um eine exakte Messung eines bestimmten Bereichs zu ermöglichen, besteht die Vorrichtung 100 in diesem Ausführungsbeispiel aus einem vakuumdichten Gehäuse 31, in welchem sich auch das Linsensystem 18 und im vorderen Bereich ein vakuumdichtes Fenster 34 befinden.

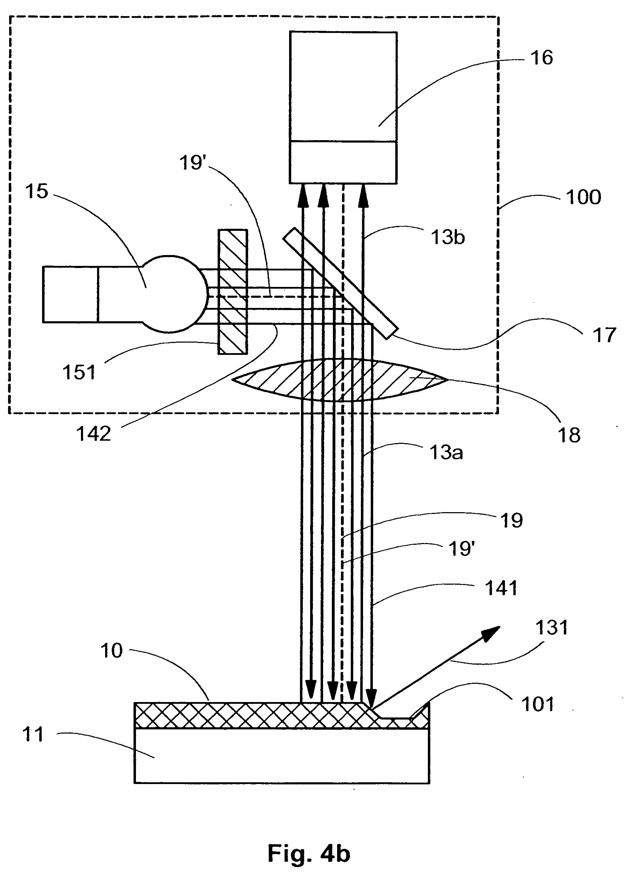

Das Gehäuse 31 ist im Inneren eines Kugelkörpers montiert, welcher über eine nicht dargestellte Dichtung im Gehäuse 33 allseitig beweglich ist. Das Gehäuse 31 ist seinerseits dicht mit dem Ofendeckel 41 verbunden. Eine solche Anordnung ist auch geeignet für die Varianten des erfindungsgemäßen Verfahrens, bei denen eine zusätzliche Strahlungsquelle 15 zur Anwendung kommt, speziell gilt dies für die in Fig. 4a und 4b gezeigte kompakte Vorrichtung, bei der der Detektor 16 und die Strahlungsquelle 15 mit dem semitransparenten Spiegel 17 über eine gemeinsame optische Achse 19 verfügen.

Zur exakten Positionierung des optischen Systems können zwei in der Infrarotmessung übliche Methoden zum Einsatz kommen. Eine Möglichkeit besteht in der Anwendung einer Laserquelle, deren Leuchtfleck die exakte Positionierung gestattet. Bekannte IR-Detektoren, welche bereits eine solche Laser-Positionierungslampe enthalten, sind hierfür geeignet. Alternativ kann der Bediener durch ein seitlich eingespiegeltes Okular das Bildfeld des Sensors 16 betrachten. Es gibt auch Ausführungen, bei denen das Okular durch eine Videokamera ersetzt wird, sodass das Bildfeld bequem auf einem Monitor betrachtet werden kann.

Bei dem dargestellten Ausführungsbeispiel befindet sich der Körper 10 übrigens leicht nach links verschoben unten im Ofenraum, sodass die optische Achse 19 des Sensors 16 etwas gegen die Vertikale geneigt ist. In Abweichung von der hier dargestellten Konstruktion kann natürlich auch der eigentliche Detektor fest an einer Stelle außerhalb der Ofenwand montiert sein, er erhält seine Information über ein Glasfaserbündel, welches analog der in Bild 5 gezeigten Anordnung mit seinem vorderen Teil vakuumdicht in einer Kugel 32 montiert ist. Selbstverständlich ist es bei all diesen Anordnungen nötig, dass alle vom Strahlenbündel 13 passierten optischen Elemente, d.h. das Linsensystem 18, das Fenster 34 und gegebenenfalls eine Glasfaserleitung aus einem Material bestehen, welches für die gewählte Wellenlänge durchlässig ist.

Bei dem dargestellten Ausführungsbeispiel ist die Vorrichtung 100 mittels einer Kugel 32 in alle Raumrichtungen bewegbar. Angepasst an das Messproblem können natürlich auch andere Bewegungsmöglichkeiten gewählt werden, in manchen Fällen genügt eine Vorrichtung, welche eine Bewegung nur in einer Achse gestattet.

Der Zweck der exakten Positionierung des Messflecks kann jedoch auch in einfacher Weise erreicht werden, indem man den Detektor 16 entsprechend Fig. 1 und die Kombination aus Detektor 16 und Strahlungsquelle 15 fest peripher an der oder ausserhalb der Ofenwand montiert und durch ein wahlweise durch eine mit einem dichten Fenster versehene Öffnung in den Ofenraum visiert, wobei der Körper 10 auf mindestens in einer Raumrichtung fahrbaren oder drehbaren Halterung positioniert ist. Auf diese Weise kann der gewünschte Bereich der Oberfläche 10 durch entsprechende Bewegung eines Verschiebungs- oder Drehmechanismus in einer oder mehreren Achsen angefahren werden.

Die oben beschriebene Möglichkeit der Verschiebung des Körpers 11 kann nicht nur zur exakten Positionierung des Messobjekts innerhalb der Fläche 10 dienen, sondern gestattet es, einen grösseren Bereich der Fläche simultan zu kontrollieren. Zu diesem Zweck erfolgt die Bewegung des Körpers in periodischer Weise, wobei während dieser Bewegung die optische Messung in getakteter Weise erfolgt, wobei die jeweils an gleicher Stelle ermittelten Werte die Intensitätsfunktion dieses Bereichs der Oberfläche 11 bilden und entsprechend dem in Fig. 2 gezeigten Schema individuell ausgewertet werden. Eine entsprechende Software kann dann z.B. feststellen, an welcher Stelle der Oberfläche 11 ein chemischer und/oder physikalischer Prozess beginnt, bzw. an welcher Stelle er zuletzt endet.

Während das Ausführungsbeispiel gemäß Fig. 5 den festen Einbau in einem Ofen für einen spezifischen Zweck, z.B. zur Kontrolle eines dentalen Brennprozesses, zeigt, kann das erfindungsgemäße Verfahren zur Kontrolle beliebiger Prozesse unter Benutzung eines Quotientenpyrometers verwendet werden, wie sie üblicherweise zum Zwecke der Temperaturmessung im Einsatz sind. Wie eingangs beschrieben, messen solche Pyrometer auf zwei Wellenlängen. Dies kann durch gleichzeitige Verwendung von zwei Detektoren oder auch mit einem Detektor geschehen, der über zwei entsprechende optische Filter verfügt, welche jeweils nur einen bestimmten Wellenlängenbereich passieren lassen. Üblicherweise stellt ein solches Pyrometer einen Kanal zur Verfügung, welcher die Strahlungsdichte einer der beiden Wellenlängen zu einer "schwarzen Temperatur" umrechnet, ein Wert, der gegebenenfalls durch Eingabe eines Emissionsgrads korrigiert werden muss. Der zweite Kanal liefert in der Regel die aus dem Intensitätsverhältnis beider Wellenlängen berechnete Temperatur, welche normalerweise nahe der effektiven Temperatur des Messobjekts liegt.

Ein solches Messgerät kann im Sinne von Anspruch 17 entsprechend dem erfindungsgemäßen Verfahren zur Kontrolle von physikalischen und/oder chemischen Prozessen verwendet werden, indem man den zeitlichen Verlauf der Intensitätskurve oder auch des Temperaturwerts einer Wellenlänge - er verläuft ja praktisch parallel zur Intensität - entsprechend der in Fig. 2 gezeigten Arbeitsweise in Bezug auf Unstetigkeiten auswertet. Eine besonders elegante Methode ergibt sich jedoch auch, wenn man den Temperaturwert einer Wellenlänge vom Temperaturwert des Quotientenkanals subtrahiert, wobei anstelle der Funktionen selbst auch ihre ersten Ableitungen verwendet werden können. Der Differenzwert kann anschliessend wahlweise wieder integriert werden. Durch diese Methode können auch geringste Unstetigkeiten, die nicht auf Temperaturänderung, sondern auf Veränderung des Emissionsverhaltens zurückgehen, sichtbar gemacht werden. Ein solches Quotientenpyrometer kann wahlweise auch über ein Relais verfügen, welches beim Eintreten einer bestimmten Veränderung des Emissionsverhaltens einen Schaltvorgang ausführt, um damit z.B. einen Alarm auszulösen oder einen Ofen zu steuern. In Fällen des Strahlungsgleichgewichts kann das Messobjekt natürlich auch im Sinne von Anspruch 2 und Fig. 3 auch das Licht einer Strahlungsquelle 15 auf das Messobjekt projiziert werden, wobei diese Strahlungsquelle entweder Teil des Pyrometers sein kann, d.h. ihr Licht über einen semipermeablen Spiegel in die optische Achse des Pyrometers leitet oder auch separat innerhalb oder außerhalb des Ofenraums angebracht werden kann.

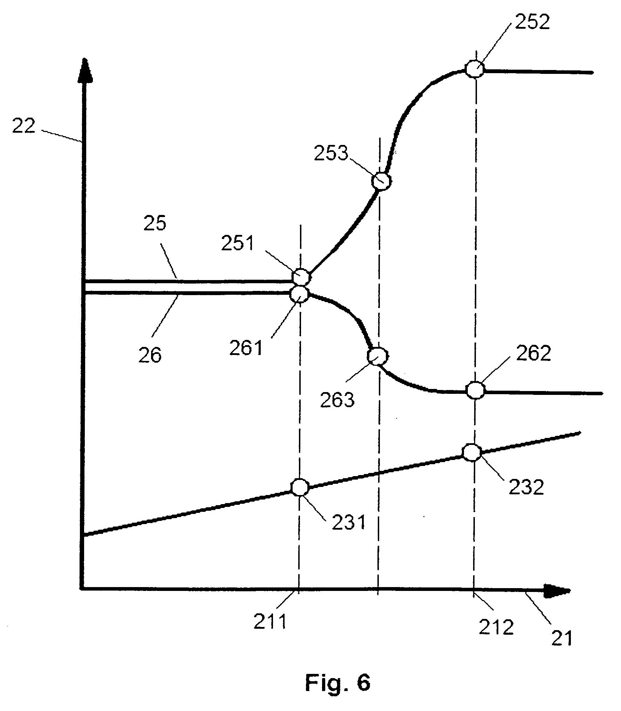

Fig. 6 zeigt in Analogie zu Fig. 2a ein Diagramm der zur Messeinrichtung 16 gelangenden Strahlung 13, welche von der durch die Strahlungsquelle 15 ausgehenden Fremdstrahlung 141 beeinflusst wird. Da die Strahlung 141 in einem völlig anderen Wellenlängenbereich des Spektrums, z.B. dem Bereich des Blaulichts liegt und auch der Detektor der Messeinrichtung 16 in diesem Wellenlängenbereich arbeitet, eventuell sogar über einen vorgeschalteten Filter gegen die langwelligere Wärmestrahlung des Ofens geschützt wird, verlaufen die Kurven 25 und 26 vor dem Einsetzen einer Reaktion völlig waagerecht und entsprechen dem Anteil der Strahlung 141, welcher von der Oberfläche 10 zum Detektor reflektiert wird.

Es wird auch hier wieder ein Sinterprozess angenommen, d.h. zu Beginn hat die ungesinterte Oberfläche 10 ein starkes Streuvermögen, sodass der Detektor unter diffuser mittlerer Bestrahlung liegt. Mit Einsetzen des Sinterprozesses beginnt sich die Oberfläche 10 in zunehmendem Masse zu glätten, wodurch die Streuung abnimmt, d.h. es entsteht eine zunehmende Abhängigkeit von der lokalen Neigung der Oberfläche 10. Bei der Kurve 25 wird angenommen, dass die durch Abnahme der Streuung zunehmend intensiver werdende Strahlung 13 immer mehr zum Detektor gelangt, wobei es vom Punkt 251 an zu einem Anstieg bis zum Punkt 252 kommt, wo der Sinterprozess beendet ist und sich eine völlig glatte und spiegelnde Oberfläche gebildet hat.

Im Gegensatz dazu liegt bei der Kurve 26 aufgrund der relativen Lage des Detektors 16 zum Einfallswinkel der von der Strahlungsquelle 15 stammenden Fremdstrahlung 141 der Fall vor, wo die Strahlung 13 in zunehmendem Masse am Detektor vorbeigespiegelt wird, wodurch es vom Beginn des Sinterprozesses beim Punkt 261 bis zu seinem Ende bei 262 zu einer zunehmenden Abnahme der Strahlungsintensität kommt.

Die Kurve 23 zeigt wieder den Verlauf der Temperatur bzw. 231 und 232 die Temperaturen zu Beginn und Ende des Sinterprozesses, wobei diese Temperatur hier jedoch von einem völlig unabhängigen Temperaturmessverfahren bestimmt werden muss.

Die in Fig. 6 gezeigten Kurven zeigen klar die Vorteile der zweiten Ausführungsform des erfindungsgemäßen Verfahrens durch Nutzung einer unabhängigen Strahlungsquelle 15 mit einem von der Temperatur der Oberfläche 10 abweichenden Strahlungsspektrum. Das eigentliche Messereignis, d.h. die durch einen physikalischen und/oder chemischen Prozess hervorgerufene Unstetigkeit, kommt wesentlich deutlicher zum Ausdruck, da es aus einer horizontal laufenden Kurve entsteht und nicht als mehr oder weniger schwaches Ereignis eine vor allem durch Temperaturveränderungen geprägte Kurve überlagert. Aus diesem Grunde kann Beginn und Ende einer Reaktion in vielen Fällen direkt aus der Messkurve selbst und nicht erst durch Verwendung der ersten oder zweiten Ableitung entsprechend Fig. 2b und 2c bestimmt werden.

Wie die Kurven 25 und 26 zeigen, kommt ein und derselbe Sinterprozess in Funktion der Winkellage der beobachteten Oberfläche zum Detektor sehr verschieden zur Darstellung. Ist die Lage der Oberfläche so angeordnet, dass ein Grossteil der reflektierten Strahlung zum Detektor gelangt, dann ergibt sich die ansteigende Kurve 25 mit grosser Amplitude, während in dem Fall, wo ein Grossteil der Strahlung vom Detektor wegreflektiert wird, eine absinkende Kurve mit niedrigerer Amplitude resultiert. Diese Vielfalt der Messsituationen spielt keine Rolle, wenn ein Detektor eine immer gleich positionierte Probe mit reproduzierbarer Geometrie, z.B. mit ebener Oberfläche, misst, in Funktion des Ablaufs des physikalischen und/oder chemischen Prozesses, z.B. einem Sintervorgang, entsteht dabei für dasselbe Material immer dieselbe Kurve, d.h. es kann mit einem festen Eichfaktor gearbeitet werden. Wesentlich komplexer liegen die Dinge jedoch, wenn z.B. ein Sintervorgang an einem beliebig geformten Körper, wie ihn ein dentales Brennobjekt darstellt, mit Hilfe einer Vielzahl von Detektoren, die in einer Pixelmatrix angeordnet sind, also z.B. einer Videokamera, verfolgt werden soll. Jedes der Pixel repräsentiert einen anderen Bereich der Oberfläche mit individueller lokaler Neigung, d.h. jedes der Pixel besitzt aus diesem Grunde einen eigenen Eichfaktor für diese Kurve, wie dies aus den verschiedenen Amplituden der Kurven 25 und 26 ersichtlich ist.

Soll der Sinterfortschritt jedoch über eine gesamte Fläche mit komplexer Oberflächentopographie in uniformer Weise bewertet werden, so ist es nötig, die Vielzahl dieser Kurven zu vereinheitlichen. Aufgrund zahlreicher Sinterversuche konnte das folgende Auswertungsverfahren entwickelt werden, mit dem diese Vereinheitlichung möglich ist:

Sowohl die Kurve 25 wie auch die Kurve 26 besitzen eine Wendetangente an den Stellen 253 bzw. 263, die sich in der ersten Ableitung als Maximum bzw. Minimum der Sinterfunktion manifestieren und durch einen einfachen Algorithmus bestimmbar sind, dasselbe gilt auch für den Beginn des Sinterprozesses an den Punkten 251 bzw. 261, welche durch Nullstellen der ersten Ableitung definiert sind. Physikalisch bedeutet der Beginn der Sinterkurve eine erstmalige Veränderung der Oberfläche des Probenkörpers, z.B. die Ausbildung von ersten Sinterhälsen an energetisch besonders günstigen Kontaktstellen benachbarter Körner unter dem Einfluss der niedrig aktivierbaren Oberflächendiffusion.

Auch die Wendetangente der Kurve hat eine physikalische Bedeutung, für ein bestimmtes Material repräsentiert sie einen reproduzierbaren Zwischenzustand vom Moment des Sinterbeginns bis zur vollendeten Sinterung, in zahlreichen Versuchen hat sich gezeigte, dass der Punkt der Wendetangente in etwa dem Zustand entspricht, bei dem die Sinterhälse verschwunden sind und die einzelnen Partikel unter Elimination der offenen Porosität zu grösseren Verbänden koagulieren, ein Moment, der auch durch den Uebergang von der Oberflächen- zur Volumsdiffusion gekennzeichnet ist.

Die Änderung des Detektorsignals vom Beginn des Sinterprozesses bis zum Punkt der Wendetangente kann also für ein bestimmtes Material als Referenzstrecke zur Beurteilung der gesamten Sinterkurve verwendet werden. Die Tatsache, dass eine definierte Bewertung einer Sinterkurve vor Eintreten ihres Wendepunkts nicht möglich ist, ist dabei ohne Belang, denn dieses erste Stück der Sinterkurve hat keinerlei Bedeutung für die Endqualität des Brennprozesses, diese Qualität stellt sich erst im nachherigen zweiten Abschnitt der Sinterkurve in unmittelbarer Nähe des Endpunktes ein, z.B. bezogen auf die Kurven 25 und 26 die Punkte 252 bzw. 262. Die Kurven verlaufen in diesem Bereich bereits schon sehr flach und der Punkt der optimalen Sinterung kann durch eine empirisch ermittelte kritische Steigung der Kurve definiert werden. Nun ist natürlich offensichtlich, dass derselbe kritische Sinterzustand in der Nähe des Punktes 252 durch eine grössere Steigung repräsentiert wird als dies für die Kurve 26 in gleicher Nähe vom Endpunkt 262 der Fall ist, welche zudem auch noch das umgekehrte Vorzeichen trägt. Um zu einer vereinheitlichten Steigung $a_{norm}$ zu

kommen, wurde die folgende Formel zur Anwendung gebracht:

$$a_{norm} = \frac{a_{25}}{(P_{253} - P_{251})} = \frac{a_{26}}{(P_{263} - P_{261})}$$

Jede Steigung a der Kurven 25 und 26 nach den Wendetangenten-Punkten 253 bzw. 263 kann also durch Division durch die Aenderung des Messwerts zwischen dem Beginn und dem Wendepunkt der Kurve normiert werden, dies gilt auch für das Vorzeichen, denn sowohl der Wert $a_{26}$ wie auch die Differenz $(P_{263} - P_{261})$ sind im Beispiel von Fig. 6 negativ und die normierte Steigung in Form des Quotienten erhält damit ebenfalls ein positives Vorzeichen wie der entsprechende Quotient der Kurve 25.

Mit dieser Methode gelang es, einen dentalen Brennofen ohne Zuhilfenahme einer exakten Brenntemperatur zu steuern, wobei eine Vielzahl verschiedener dentaler Brennmassen mit unterschiedlichsten Brenntemperaturen und -zeiten zum Einsatz kamen. Der Ofen fuhr die Temperatur in einer ersten Phase mit einer fixen Aufheizgeschwindigkeit hoch, bis sich der Beginn des Sintervorgangs durch eine deutliche Abweichung der ersten Ableitung der Kurve vom Nullwert zeigte. Die Werte aller Pixel wurden zu diesem Zeitpunkt gespeichert und dann abgewartet, bis sich der Moment der Wendetangente durch Auftreten eines Maximums oder Minimums in der Kurve jedes Pixels manifestierte, von diesem Moment an wurde die obenstehende Formel zur Anwendung gebracht und es zeigte sich, dass die Kurven aller Pixel praktisch übereinanderfielen. Dieser Zeitpunkt wurde auch zur Reduktion der Ofenleistung verwendet.

Ein solches ideales Verhalten tritt natürlich nur dann auf, wenn der Sinterprozess in der ganzen beobachteten Fläche in simultaner Weise abläuft. In der Praxis ist dies jedoch nie der Fall, einerseits ist das Temperaturfeld in einem kleinen Dentalofen nicht homogen und andererseits läuft der Sinterprozess an scharfen Kanten infolge des Einflusses der Oberflächenspannung lokal schneller ab, die oben zur Darstellung gebrachte Auswertungsmethode besitzt aus diesem Grunde eine noch grössere Bedeutung, da damit der lokale Sinterfortschritt an jeder Stelle des Brennguts einheitlich bewertet werden kann. Für ein optimales Brennergebnis kann dann z.B. ein Algorithmus gewählt werden, bei dem eine Mindestzahl der sich ändernden Pixel eine vorgegebene normierte Endsteigung erreicht hat, womit sichergestellt ist, dass auch ungünstige Stellen des Brennguts auf den optimalen Punkt gesintert sind. Dies ist nur ein Beispiel eines Steuerprozesses, welcher speziell für dentale Brennprozesse geeignet ist, für andere Prozesse, z.B. die Beobachtung der Aenderung der Stöchiometrie von Oberflächenoxiden von Metallen bei Aenderung der Temperatur und/oder des Sauerstoffpartialdrucks sind jedoch auch eine Vielzahl anderer Algorithmen denkbar, die jedoch in der Regel ebenfalls eine individuelle Anpassung an die diesen Prozessen eigene Form der ersten Ableitung der Detektorkurven, insbesondere durch Nutzung von Maxima, Minima und Nullstellen entspricht.

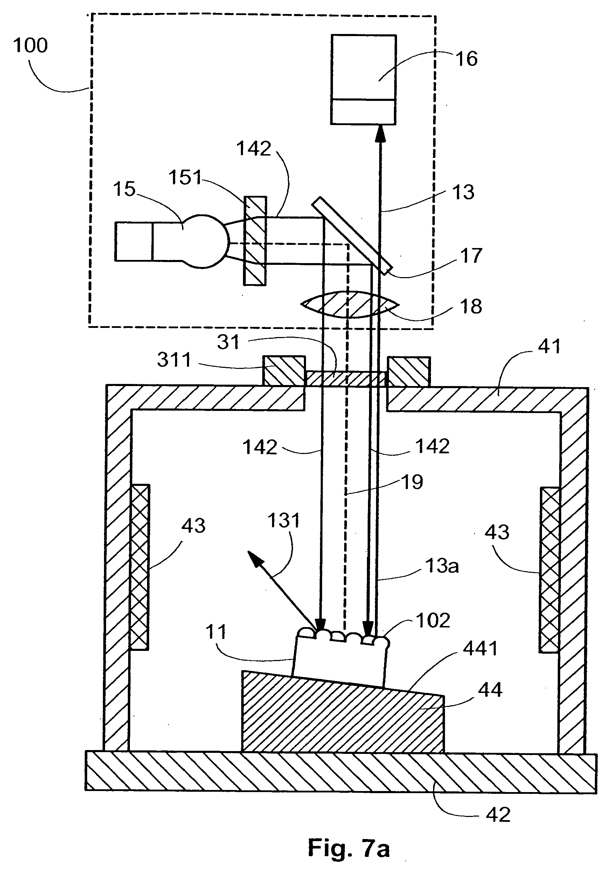

Fig. 7a zeigt eine Anordnung wie sie ähnlich in Fig. 4b gezeigt ist, die speziell für die Verfolgung des Sintervorgangs an keramischen oder metallischen Grünkörpern mit ebener Oberfläche geeignet ist. Der Körper 11 mit seiner noch ungesinterten Oberfläche 102, die schematisch als Kugelhaufwerk dargestellt ist, befindet sich auf einem Probenträger 44 mit gegen die Horizontale um einen bestimmten Winkel geneigter Oberfläche 441, im Zentrum der optischen Achse 19 eines optischen Systems 100. Die starke Streuwirkung der Oberfläche wird durch einen gerichteten Strahl 142 repräsentiert, dessen Reflexion 131 vom Detektor 16 weggespiegelt wird, während ein anderer Strahl 142 einen Teil der Oberfläche trifft, dessen Reflexion 13a durch den semipermeablen Spiegel 17 und das Linsensystem 18 leicht abgeschwächt als Strahlung 13b direkt in den Detektor gelangt. Da der Detektor 16 nur im Wellenlängenbereich der Strahlungsquelle 15 empfindlich ist, wird weder die natürliche Temperaturstrahlung der Oberfläche 102 noch der reflektierte Strahlungsanteil der Heizwicklungen 43 wahrgenommen. Der semipermeable Spiegel 17 gestattet es, sowohl die eingebrachte wie auch die reflektierte Strahlung über ein im vakuumdichten Flansch 311 angebrachtes Fenster 31, welches vorzugsweise aus Quarzglas besteht, durchzuleiten, wodurch die Öffnung im Ofenraum möglichst klein gehalten werden kann.

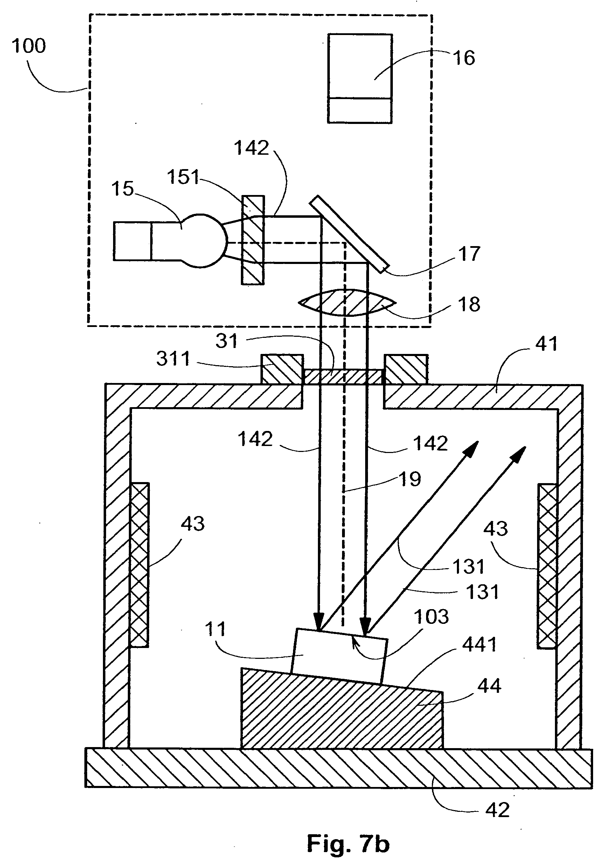

Fig. 7b zeigt die Vorteile einer solchen Ausführungsform unter Verwendung des Probentisches 44 mit der geneigten Oberfläche 441. Der Winkel dieser Neigung wurde so gewählt, dass die durch einen Sinterprozess geglättete Oberfläche 103 keine Glanzspiegelung zum Detektor 16 schicken kann, was möglicherweise der Fall wäre, wenn der Körper 11 auf einem waagerechten Tisch liegen würde. Da von einer spiegelglatten Oberfläche reflektierte Strahlen einen extrem engen Streukegel aufweisen, würden schon geringste Abweichungen von der Horizontalen dazu führen, dass Teilbereiche der Oberfläche 103 entweder völlig dunkel wirken oder extreme Glanzspiegelungen zeigen, wobei entsprechend Fig. 6 rein zufallsmässig entweder die Charakteristik von Kurve 25 oder von Kurve 26 entsteht. Durch die Neigung erfolgt das Verhalten jedoch immer eindeutig entsprechend Kurve 26 von Fig. 6, d.h. im ungebrannten Zustand ergibt sich eine mittlere Strahlungsintensität, die während des Sintervorgangs bis gegen Null absinken kann, wie die beiden von der optischen Achse 19 stark wegreflektierten Strahlen 131 in schematischer Weise zeigen.

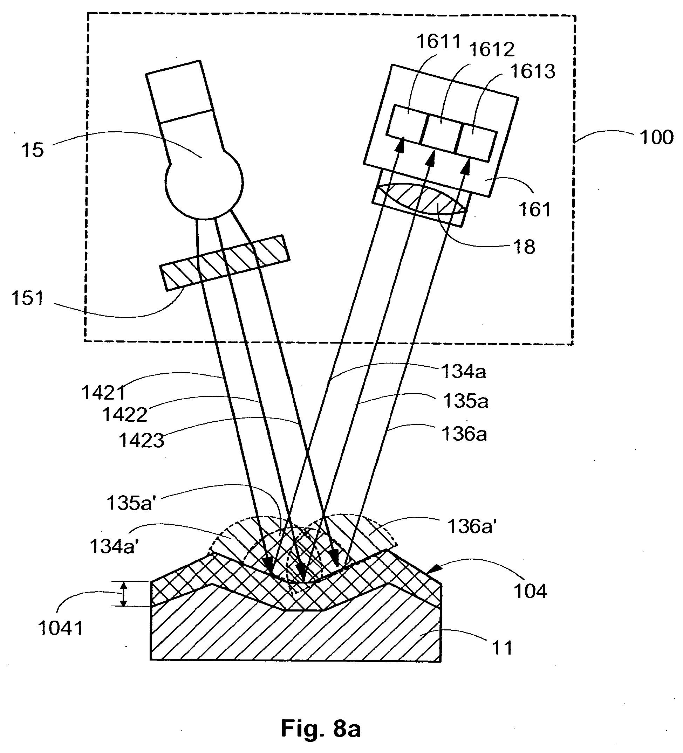

Fig. 8a zeigt eine Variante der zweiten Ausführungsform des erfindungsgemäßen Verfahrens unter Nutzung einer Strahlungsquelle 15, wobei jedoch anstelle eines einzelnen Detektors entsprechend der Lehre von Anspruch 8 eine Matrix von Sensoren zur Anwendung kommt, die in schematisch stark vereinfachender Weise durch die drei Sensoren 1611, 1612 und 1613 dargestellt wird, welche Teil einer Vorrichtung 161 mit Matrix sind. Als Vorrichtung dieser Art kann z.B. eine Sensormatrix angesehen werden, wie sie in digitalen Kameras, Videokameras und z.B. UV-Kameras zur Anwendung kommt wobei die Strahlungsquelle 15 dann ebenfalls in diesem Bereich arbeiten muss, es kann sich jedoch auch um eine normale Videokamera handeln, bei der das Messobjekt z.B. mit einer Strahlungsquelle 15 im Blaulicht-Bereich beleuchtet wird, wobei von der Videokamera nur dieser kurzwellige Bereich für die Messung genutzt wird. Dies kann dadurch geschehen, dass z.B. die einfallende Strahlung 13 auf ihrem Weg zur Sensor-Matrix 161 ein optisches Filter passiert, welches den langwelligen Bereich eliminiert, es kann jedoch auch auf der Ebene der Auswertung erfolgen, indem nur die langwelligen Anteile des Videosignals ausgewertet werden.

Um eine möglichst hohe Lichtausbeute zu erhalten, arbeitet diese Verfahrensvariante ohne semipermeablen Spiegel, d.h. Strahlungsquelle 15 mit Kollimator 151 sowie Kamera 161 mit ihrem Linsensystem 18 besitzen eigene gegeneinander angewinkelte optische Achsen, die sich auf der Oberfläche 104 des Körpers 11 treffen. Im vorliegenden Beispiel soll klar der Einfluss der Streuung, welche im Mikrobereich durch die Rauheitstiefe 1041 der Oberfläche 104 ungeachtet ihrer lokalen Ausrichtung verursacht wird, von der Wirkung der Ausrichtung von Teilflächen im makroskopischen Bereich abgegrenzt werden. Dies würde z.B. der Oberfläche eines keramischen Grünkörpers entsprechen, dessen Oberfläche stark gegeneinander geneigte Teilflächen aufweist, wie sie z.B. typischerweise bei dentalem Brenngut auftreten.

Von der Strahlungsquelle 15 gehen in dieser schematischen Darstellung drei Strahlen 1421, 1422 und 1423 aus, welche verschieden geneigte Bereiche der Oberfläche 104 treffen, die aber alle denselben Rauheitsgrad und damit dieselbe Streuwirkung aufweisen. Als Resultat dieser grossen Streuwirkung entstehen die halbkugelförmigen Streukugeln 134a', 135a' und 136a', welche symbolisieren sollen, dass alle Teilflächen - ungeachtet ihrer lokalen Neigung - etwa in gleicher Art und gleichmässig allseitig in den Raum abstrahlen. Jedes der Pixel 1611, 1612 und 1613 der Detektormatrix 161 erhält also einen kleinen Teil der Strahlung in Form der reflektierten Strahlen 134a, 135a und 136a, was sich dadurch manifestiert, dass die Detektormatrix weitgehend gleichmässig und ohne große Kontraste ausgeleuchtet ist.

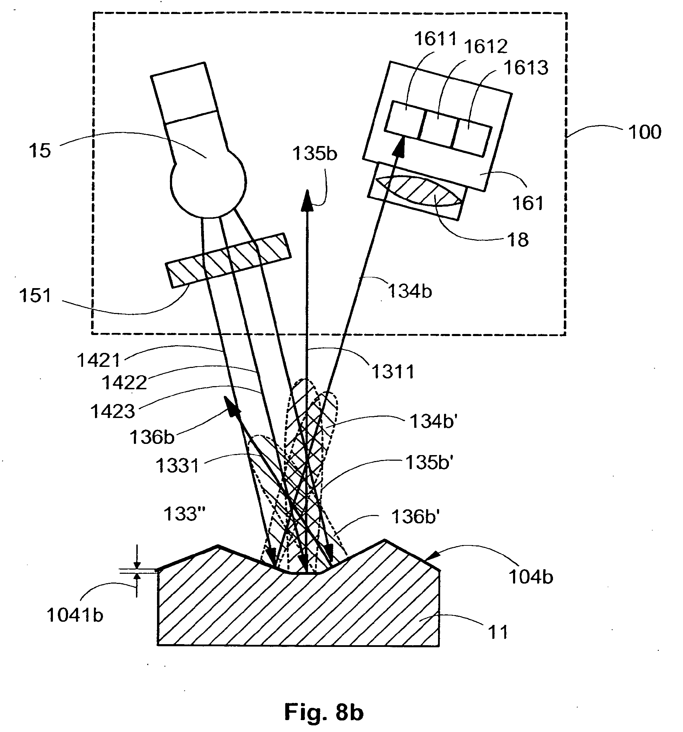

Fig. 8b zeigt einen Übergang einer inzwischen eingesetzten Reaktion, bei dem das Makrorelief der Oberfläche 104b zwar immer noch dem in Fig. 8a für die Oberfläche 104 gezeigten Zustand entspricht, die Rauheitstiefe sich jedoch auf den Wert 1041b vermindert hat. Aus diesem Grunde hat sich auch die Breite der Streukegel 134b', 135b' und 136b' vermindert, sie liegen nun enger bei der Richtung, welche durch den Einfallrichtung der Strahlen 1421, 1422 und 1423 um die Mittelsenkrechte auf der jeweiligen getroffenen Teilfläche in die Gegenrichtung reflektiert entspricht. Die engeren Streukegel führen zu einer höheren Strahldichte, jedoch nur die vom Strahl 1421 getroffene Teilfläche besitzt gerade den Neigungswinkel, welche den reflektierten Strahl 134b direkt zum Pixel 1611 der Detektormatrix 161 führt, die Strahlen 135b und 136b werden vom Detektor weggespiegelt. Als Resultat ergibt sich in dieser Phase der Reaktion also ein Anstieg der Strahlungsintensität beim Detektor-Pixel 1611, während die Pixel 1612 und 1613 eine abnehmende Strahlungsintensität zeigen.

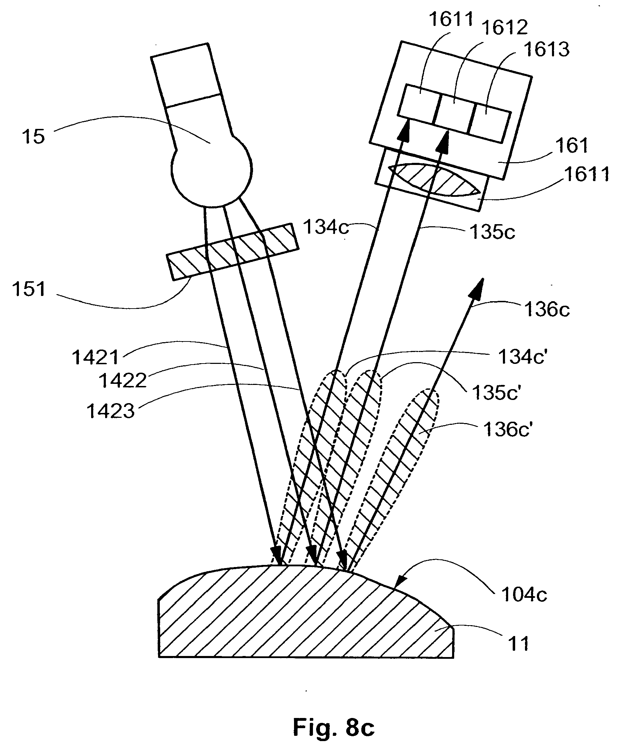

Fig. 8c zeigt den Endzustand der Reaktion, deren Übergang in Fig. 8b gezeigt wurde. Unter dem Einfluss der Oberflächenspannung, welche z.B. im letzten Stadium eines Brennprozesses aufgrund der großen Beweglichkeit der Brennmasse stark zum Ausdruck kommt, hat sich die einstmals aus verschieden geneigten Teilflächen bestehende Oberfläche zur rundlich bombierten Fläche 104c gewandelt, welche ein hohes Reflexionsvermögen besitzt. Grosse Teile der Oberfläche besitzen nun annähernd ähnliche Neigung, sodass nun die reflektierten Strahlungsanteile 134c und 135c, die von den gerichteten Strahlen 1421 und 1422 stammen, zu den Pixeln 1611 und 1612 der Detektormatrix 161 gelangen, während nur der Strahl 136c wegen der geringen örtlichen Neigung der Oberfläche 104c am Detektor vorbeizielt. Da sich die Streukegel 134c', 135c' und 136c' gegenüber Fig. 8b noch ein bisschen mehr verengt haben, ist die Strahldichte sowohl der auf Detektorpixel treffenden wie auch der an ihnen vorbeizielenden Strahlen grösser geworden.

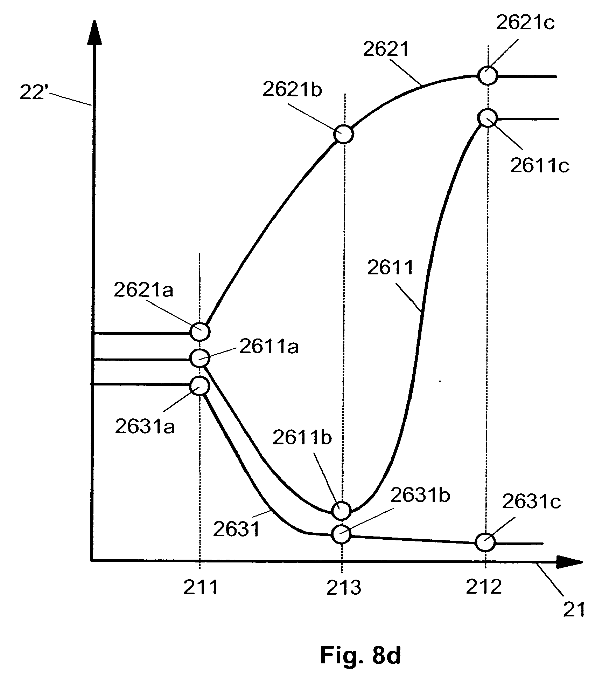

Fig. 8d zeigt zusammenfassend die Strahlungsintensitätsfunktionen der drei Pixel 1611, 1612 und 1613, wie sie in schematischer Weise in den Fig. 8a - 8c während verschiedener Stadien zu den Zeitpunkten 211, 212 und 213 einer Reaktion, z.B. eines Sinterprozesses, dargestellt sind. Vor Beginn der Reaktion ist die von allen drei Pixeln wahrgenommene Strahlungsintensität aufgrund der grossen Streuwirkung sehr ähnlich, d.h. die Startpunkte 2611a, 2621a und 2631a der Reaktion liegen nahe beieinander, anschliessend tritt jedoch - entsprechend der verschiedenen Ausrichtung der Teilflächen beginnend vom Ausgangszustand der Oberfläche 104 bis zum Endzustand der Oberfläche 8c für jedes der Pixel ein verschiedenartiges Verhalten auf.

Beim Pixel 1611 nimmt aufgrund der abnehmenden Streuwirkung und der vom Detektor wegweisenden Oberflächenneigung die Strahlungsintensität vom Punkt 2611a zum Zwischenzustand der Reaktion auf den Wert 2611b ab, im letzten Stadium der Reaktion glättet sich jedoch die Oberfläche, sodass der Messwert des Pixels 1611 bis auf den Endwert 2611c zunimmt.

Beim Pixel 1621, welches einen Teil der Oberfläche darstellt, welcher durch alle Phasen der Reaktion immer günstig zu ihm ausgerichtet ist, führt die zunehmende Abnahme der Rauheitstiefe zu einer stetigen Zunahme der Strahlungsintensität entsprechend der Werte 2621a über den Wert 2121b zum Endwert 2121c.

Ein stetiges Verhalten zeigt auch das Pixel 1631, hier liegt die von ihm repräsentierte Teilfläche immer so zu ihm geneigt, dass die Strahlung immer von ihm wegreflektiert wird, unter dem Einfluss der abnehmenden Streuwirkung wird dieser Effekt immer stärker ausgeprägt, sodass die Strahlungsintensität angefangen vom Anfangswert 2631a über den Zwischenzustand 2631b bis zum Endzustand 2631c stetig abnimmt.

Die in den Fig. 8a - 8d erläuterte Verfahrensvariante arbeitet entsprechend der zweiten Ausführungsform des erfindungsgemäßen Verfahrens, d.h. unter Nutzung einer Strahlungsquelle 15, welche vorzugsweise in einem Wellenlängenbereich arbeitet, der ausserhalb des Spektrums der natürlichen Temperaturstrahlung der Fläche 10 und ihrer Umgebung liegt. Die Lehre von Anspruch 8 kann jedoch auch ohne weiteres auch in Kombination mit der ersten Ausführungsform des erfindungsgemäßen Verfahrens zur Anwendung kommen, bei der die Fremdstrahlung der Umgebung genutzt wird. In einem solchen Fall kann dann als Sensor-Matrix z.B. ein Bauteil verwendet werden, wie es in der Thermographie verwendet wird oder z.B. auch eine im sichtbaren Bereich arbeitende Videokamera, deren Wellenlängenbereich in vielen Fällen auch in den Bereich des IR hinüberreicht. In all diesen Fällen muss die Auswertung dann sinngemäss analog der Arbeitsweise erfolgen, wie sie für einen Sensor in Fig. 2 gezeigt ist, d.h. die Informationen über den Verlauf eines physikalischen und/oder chemischen Prozesses müssen als Unstetigkeit aus dem Verlauf der Signalkurve jedes Pixels der Matrix ermittelt werden. Allerdings unterliegt eine solche Arbeitsweise auch der grundsätzlichen Einschränkung, die für Verfahrensvarianten der ersten Ausführungsform gilt, d.h. während des Messprozesses muss die Temperatur der Oberfläche 10 und ihrer Umgebung entweder konstant bleiben oder sich in stetiger Weise verändern, damit eine durch einen Prozess verursachte Unstetigkeit eindeutig erkennbar wird.

Eine Ausnahme innerhalb dieser Varianten der ersten Ausführungsform stellt der Fall dar, wo der Verlauf einer durch UV-Licht ausgelösten Polymerisation im erfindungsgemäßen Sinne verfolgt wird. Das Beleuchtungssystem in Form einer UV-Lampe kann dabei als Fremdstrahlung 14 aussendender Teil der Umgebung angesehen werden, da die Lampe primär zum Zwecke der Polymerisation dient und damit systemimmanenter Teil der Umgebung der Oberfläche 10 ist. Der zum Einzeldetektor 16 oder zu einer Detektor-Matrix 161 reflektierte Teil der UV-Strahlung kann dann im erfindungsgemäßen Sinne verwendet werden, um den Verlauf der Polymerisationsreaktion zu verfolgen und die Bestrahlungsdauer zu minimieren, allerdings immer unter der Voraussetzung, dass die Polymerisation von Veränderungen der optischen Eigenschaften begleitet ist, welche von der Messeinrichtung 16 wahrgenommen werden können.

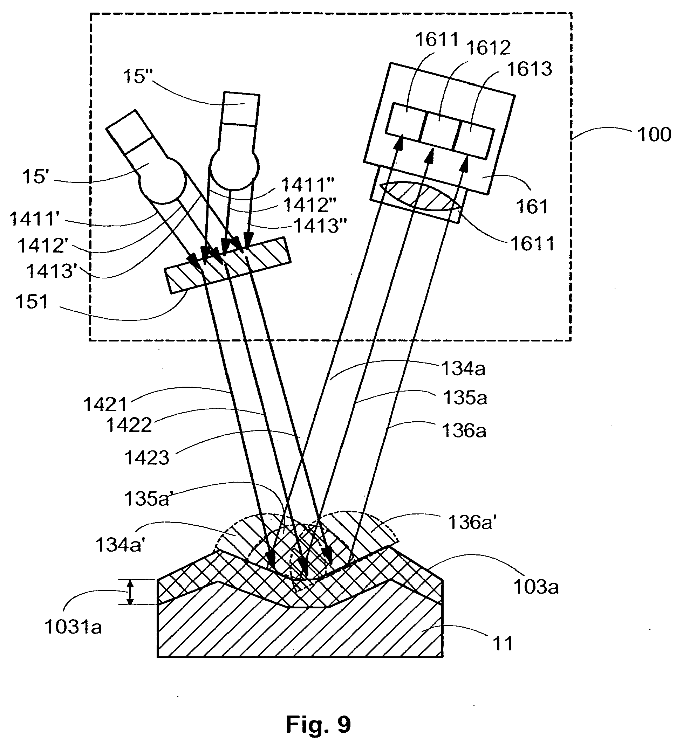

Fig. 9 zeigt eine weitere Variante der zweiten Ausführungsform des erfindungsgemäßen Verfahrens, bei der zwei Strahlungsquellen 15' und 15'' mit verschiedenen Wellenlängen zum Einsatz kommen, z.B. zwei UV-LEDs, von denen die eine im Wellenlängenbereich von 400 nm und die andere von 300 nm arbeitet. Die Strahlen beider Strahlungsquellen werden in einem Kollimator gebündelt und dann als gebündelte Strahlen 1421, 1422 und 1423 auf die Oberfläche 104 des Körpers 11 geworfen, wo sie - in Analogie zu Fig. 8a entsprechend der Rauheitstiefe 1041 und dem lokalen Oberflächerelief Streukreise erzeugen, von denen die reflektierten Teilstrahlen 134a, 135a und 136a zu den Sensoren 1611, 1612 und 1613 der Sensormatrix 161 gelangen. Die Auswertung der Signale dieser Sensoren erfolgt analog zu der in Fig. 6 gezeigten Darstellung, jedoch in doppelter Weise, indem der Verlauf der Strahlungsintensität sowohl im Wellenlängenbereich von 400 nm wie auch 300 nm verfolgt wird.

Die Auswertung kann dabei auf zwei Arten erfolgen. Im einen Fall können die Strahlungsquellen 15' und 15'' abwechselnd ein- und ausgeschaltet werden, so dass kurzzeitig nur Licht einer der beiden Wellenlängen zur Sensormatrix gelangt, wo seine Intensität gemessen wird, es ist jedoch auch möglich, dass beide Strahlungsquellen 15' und 15'' gleichzeitig arbeiten, wobei dann die Signale der Sensoren der Matrix speziell im Bereich der beiden Wellenlängen ausgewertet werden.

Anstelle der Messung der Strahlungsintensität bei den beiden Wellenlängen kann jedoch auch neben der Strahlungsintensität (z.B. Luminanzanteil des Signals) auch der Farbwert (z.B. Chrominanzanteil des Signals) gemessen werden, da jede Verschiebung der Intensität mit der Wellenlänge sich auch in einer Veränderung des Farbwerts bemerkbar macht.

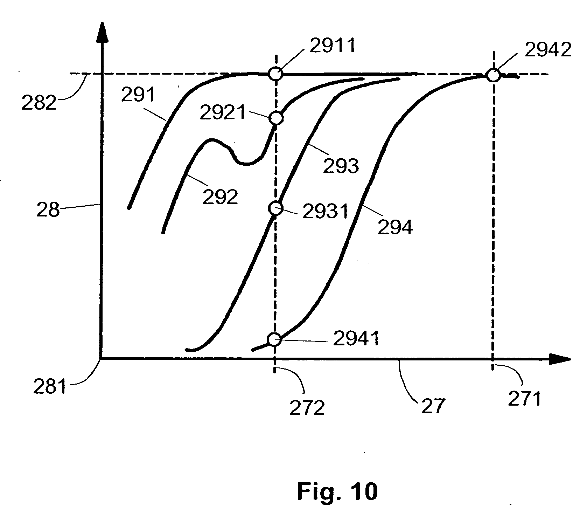

Fig. 10 zeigt den Sinn einer solchen Massnahme speziell für die Verfolgung von Reaktionen an Gläsern. Die Darstellung zeigt ein Diagramm mit der Achse 27 für Wellenlänge und der Achse 28 für die Transmissivität eines Glases. Gläser besitzen bekannterweise die sog. »W-Kante«, das ist ein Wellenlängenbereich, in dem ihre Lichtdurchlässigkeit bei der Verschiebung zu kürzeren Wellenlängen abrupt gegen Null fällt. In der Darstellung bezeichnet die Kurve 291 die Transmissivität von reinstem Quarzglas, bei einer Wellenlänge von 300 nm, welche durch die gestrichelte Linie 272 und den Punkt 2911 auf der Kurve 291 markiert wird, bleibt die Transmissivität in Hochlage.

Die Kurve 292 zeigt den Verlauf der Transmissivität von Quarzglas mit Verunreinigungen, bei der gleichen Wellenlänge entsprechend der Linie 272 ist hier die Transmissivität bereits bis zum Punkt 2921 gesunken. Die Kurven 293 und 294 zeigen Natriumsilikat-Gläser mit steigenden Anteilen an Fremdoxiden und die entsprechenden Punkte 2931 und 2941 zeigen die starke Abnahme der Transmissivität. Diese Strahlunsabsorption in diesem Bereich des UV-Spektrums geht vorwiegend auf die Anregung von Schwingungen der Sauerstoffatome im Silikatgitter zurück, wobei diese Anregung umso mehr gegen den Bereich niedrigerer Wellenlängen verschoben wird, je freier die Sauerstoffatome oszillieren können. Bekannterweise sind basische Oxyde wie z.B. Natriumoxyd sog. Netzbrecher, d.h. sie brechen das dreidimensionale Netz der Si-O-Bindungen stellenweise auf und schaffen dadurch endständige Sauerstoffionen.

Bei einer Wellenlänge von 400 nm, welche der gestrichelten Linie 271 im Diagramm von Fig. 10 entspricht, befinden sich sämtliche Kurven beim Punkt 2942 in der Hochlage der Transmissivität. Wird also die Kurvenauswertung analog der in Fig. 6 gezeigten Verfahrensweise auf beiden Wellenlängen durchgeführt, so kann man aus dem Verhältnis der Intensitäten Rückschlüsse auf den Grad der Abnahme der Transmissivität und damit auf den chemischen Aufbau einer Glasoberfläche ziehen, da ja die Transmissivität wesentlicher Bestandteil des Emissionsverhaltens einer Oberfläche ist. Da sich die Gitterschwingungen von Silikatgläsern auch in Funktion ihres Kristallinitätsgrades ändern, kann die Verschiebung der UV-Rampe bei vorgegebener Zusammensetzung auch für die Messung des Kristallinitätsgrades genutzt werden, was z.B. bei Brennprozessen von Gläsern mit nachfolgender Wärmebehandlung von Bedeutung ist, z.B. bei Verwendung im dentalen Bereich, wo Glaskeramik bestimmter Kristallinität zur Erzeugung ästhetisch günstiger Effekte (Opaleszenz) zum Einsatz kommt.

Diese Verfahrensvariante, bei der simultan auf mehr als zwei Wellenlängen bemessen oder neben dem Intensitätswert auch der Farbwert jedes Pixels bestimmt wird, ist von besonderem Interesse, da er es gestattet, in manchen Fällen die Aenderungen der Topographie der Probentopographie und Veränderungen des Materialaufbaus der Oberfläche unter Verwendung spezieller Auswertungsalgorithmen voneinander zu trennen. Aenderungen der Topographie wirken sich bei allen Wellenlängen eines Pixels in ähnlicher Weise aus, d.h. bei Abwesenheit chemischer Veränderungen haben die bei verschiedenen Wellenlängen ermittelten Intensitätskurven ähnlichen Verlauf, im Gegensatz dazu verändert sich das Intensitätsverhältnis bei Ablauf einer solchen Reaktion und kann z.B. dargestellt werden, indem man den Quotient der Intensität zweier Wellenlängen als Kurve gegen die Zeit aufträgt.

Die Verwendung eines Kollimators zur Bündelung der Strahlung beider Strahlungsquellen 15' und 15'' in Fig. 9 ist deshalb wichtig, da ein exaktes Verhältnis der Strahlungsintensität bei zwei Wellenlängen unabhängig von lokalen Abweichungen der Topographie nur dann ermittelt werden kann, wenn die Einstrahlung beider Wellenlängen entlang derselben optischen Achse erfolgt.

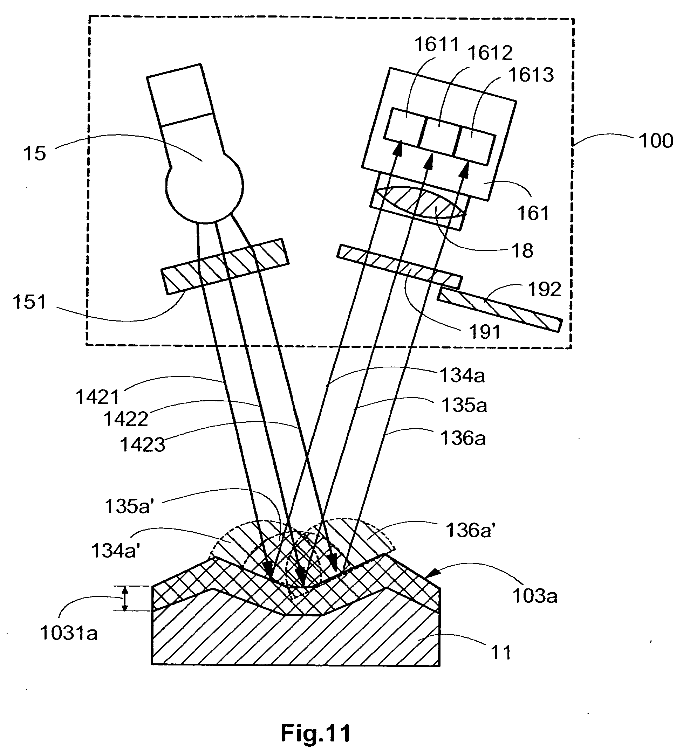

Fig. 11 zeigt eine Variante der in Fig. 9 gezeigten Verfahrensvariante, welche ebenfalls auf zwei Wellenlängenbereichen arbeitet, jedoch wird hier eine breitbandige UV-Lampe verwendet, welche den Wellenlängenbereich mindestens eines Teils der UV-Kante umfasst. Wird eine ebenfalls breitbandige Sensor-Matrix 161 verwendet, dann kann die Bestimmung der Intensität der beiden Wellenlängen so erfolgen, dass periodisch die optischen Filter 191 und 192 in den Strahlengang geschoben werden, wodurch jeweils ein bestimmter Bereich der UV-Strahlung absorbiert wird. Selbstverständlich besteht jedoch auch bei Verwendung einer breitbandigen Strahlungsquelle 15 die Möglichkeit, ohne die optischen Filter 191 und 192 zu fahren und stattdessen bei der Auswertung nur die für die Identifikation nötigen Wellenlängenbereiche des Videosignals zu nutzen, es kann jedoch auch wie vorher beschrieben auch neben der Intensitätsveränderung (z.B. Luminanz) auch die Verschiebung des Farbwerts z.B. Chrominanz) verwendet werden.

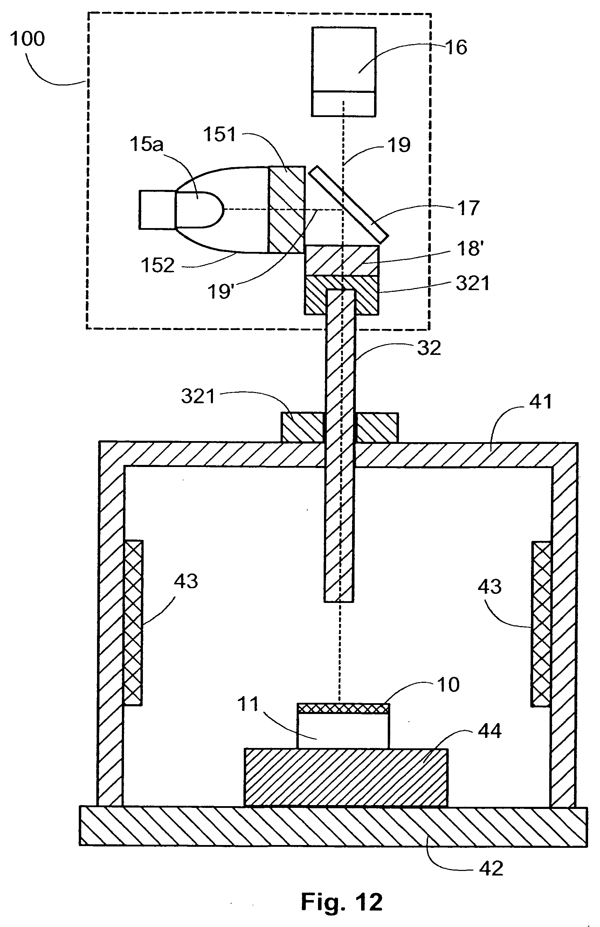

Fig. 12 zeigt eine weitere Variante der zweiten Ausführungsform des erfindungsgemässen Verfahrens, welches in Analogie zu der in Bild 4b gezeigten Vorrichtung einen semipermeablen Spiegel 17 verwendet, um die Strahlung einer Strahlungsquelle 15a, im vorliegenden Beispiel eine Blaulicht-LED mit Reflektor 152 und vorgesetztem Kollimator 151, auf dieselbe optische Achse zu bringen, die auch von der Messvorrichtung 16 verwendet wird. Anschliessend an den semipermeablen Spiegel 17 wird das Licht durch ein Linsensystem 18' und ein Anschlussteil 321 in einen Lichtwellenleiter 32 geleitet, der im vorliegenden Beispiel aus einer Quarzglas-Stange besteht, welche durch einen Flansch 322 vakuumdicht in einen Ofen eingeleitet wird.

Selbstverständlich kann als Lichtwellenleiter auch ein üblicherweise verwendetes Faserbündel verwendet werden, da es im vorliegenden Fall nur um die Möglichkeit geht, die Strahlung in kompakter und temperaturfester Weise in den Innenraum eines Ofens zu leiten, bzw. die platzbeanspruchenden und wärmeempfindlichen Komponenten des optischen Systems 100 elegant ausserhalb des Ofens anzuordnen, ist die Nutzung eines starren Lichtwellenleiters in Form eines temperaturfesten Quarzstabs von besonderem Vorteil. Die Nutzung eines beweglichen Faserbündels kann man sich auch als besonders vorteilhaft bei einer analog zur Fig. 5 aufgebauten Vorrichtung vorstellen, wo der Lichtwellenleiter anstelle der Messvorrichtung in das Kugelgelenk 32 montiert wird, sodass die übrigen Komponenten des optischen Systems 100 in fester Position unabhängig von der Bewegung des Kugelgelenks montiert werden können.

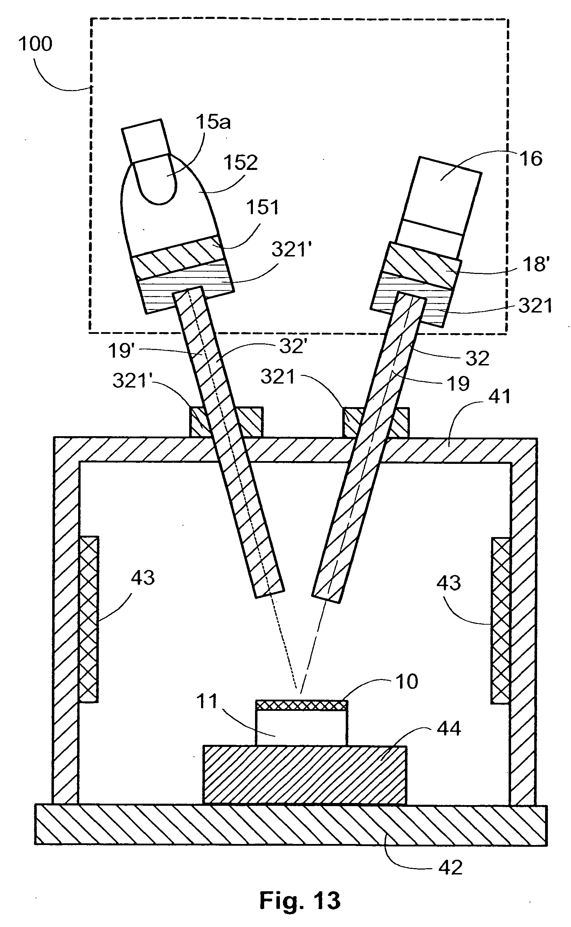

Fig. 13 zeigt eine weitere Variante einer erfindungsgemäßen Vorrichtung, welche im Gegensatz zur Vorrichtung von Fig. 12 auf einen semipermeablen Spiegel verzichtet und stattdessen die von der Strahlungsquelle 15a gelieferte Strahlung sowie auch die von der Oberfläche 10 zur Messvorrichtung 16 reflektierte Strahlung über Lichtwellenleiter 32 und 32', vorzugsweise in Form von Quarzstäben, leitet, wobei beide Lichtwellenleiter über Kupplungsstücke 321 und 321' mit den übrigen Teilen des optischen Systems verbunden sind. Diese Vorrichtung gestattet durch Entfallen des semipermeablen Spiegels eine grössere Strahlunsausbeute, jedoch müssen sich die optischen Achsen der Strahlungsquelle 15a und der Messvorrichtung 16 exakt auf der Oberfläche 10 des Körpers 1 treffen.

Die Verwendung von Lichtwellenleitern beschränkt sich natürlich nicht auf einzelne Detektoren, wie in den Fig. 12 und 13 gezeigt, anstelle dieser einzelnen Detektoren kann sinngemäss auch eine Sensor-Matrix, etwa eine Videokamera gesetzt werden.

Bezugszeichenliste

| Ziffer | Name |
|---|---|
| 100 | Vorrichtung |
| 10 | Oberfläche, allg. |
| 101 | Vertiefung in Oberfläche |
| 102 | Oberfläche mit ungesinterten Partikeln |
| 103 | Versinterte glatte Oberfläche |
| 104 | Unregelmässige Oberfläche mit grosser Rauheitstiefe 1041a |
| 1041a | Rauheitstiefe |
| 104b | Unregelmässige Oberfläche mit geringer Rauheitstiefe 1041b |
| 1041b | Rauheitstiefe |
| 104c | Spiegelglatte teilweise bombierte Oberfläche |
| 11 | Körper |
| (12) | (Prozess) |
| 13 | Reflektierte Strahlung von Oberfläche zum Detektor |
| 131 | Durch Topographie vom Detektor abgelenkte reflektierte Strahlung |
| 132 | Durch Streuwirkung Lichtquelle vom Detektor abgelenkte reflektierte Strahlung |
| 13a | Reflektierte Strahlung vor semipermeablem Spiegel |
| 13b | Reflektierte Strahlung hinter semipermeablem Spiegel |
| 134a | Reflektierter schwacher Strahl zu Pixel 1611 des Chips einer Detektormatrix |
| 134a’ | Diffuser Streukegel |
| 134b | Intensivere reflektierte Strahlung zu Pixel 1611 aus engerem Streukegel 134b’ |
| 134b’ | Engerer Streukegel |
| 134c | Intensivere reflektierte Strahlung zu Pixel 1611 aus noch engerem Streukegel 134c’ |
| 134c’ | Noch engerer Streukegel |
| 135a | Reflektierter schwacher Strahl zu Pixel 1612 des Chips einer Detektormatrix |
| 135a’ | Diffuser Streukegel von Strahl 135 |
| 135b | Intensivere reflektierte Strahlung aus engerem Streukegel 135b’, vom Detektor weg |
| 135b’ | Engerer Streukegel |
| 135c | Intensivere reflektierte Strahlung zu Pixel 1612 des Chips einer Detektormatrix |
| 135c’ | Noch engerer Streukegel |
| 136a | Reflektierter schwacher Strahl zu Pixel 1613 des Chips einer Detektormatrix |
| 136a’ | Streukegel von Strahl 136 |
| 136b | Intensivere reflektierte Strahlung aus engerem Streukegel 136b’, vom Detektor weg |
| 136b’ | Engerer Streukegel |
| 136c | Intensivere reflektierte Strahlung aus engerem Streukegel 136c’, vom Detektor weg |
| 136c’ | Noch engerer Streukegel |
| 14 | Fremdstrahlung allg. |
| 141 | Fremdstrahlung von Strahlungsquelle 15 |
| 1411’ | Ungerichteter Teilstrahl kleinerer Wellenlänge vor Kollimator |
| 1412’ | Ungerichteter Teilstrahl kleinerer Wellenlänge vor Kollimator |
| 1413’ | Ungerichteter Teilstrahl kleinerer Wellenlänge vor Kollimator |
| 1411’’ | Ungerichteter Teilstrahl grösserer Wellenlänge vor Kollimator |
| 1412’’ | Ungerichteter Teilstrahl grösserer Wellenlänge vor Kollimator |
| 1413’’ | Ungerichteter Teilstrahl grösserer Wellenlänge vor Kollimator |
| 141a | Nicht nutzbarer ungerichteter Strahl von Strahlungsquelle 15 |
| 141b | Nutzbarer ungerichteter Strahl von Strahlungsquelle 15 |
| 142 | Gerichtete Fremdstrahlung hinter Kollimator |
| 1421 | Gerichteter Teilstrahl hinter Kollimator |
| 1422 | Gerichteter Teilstrahl hinter Kollimator |
| 1423 | Gerichteter Teilstrahl hinter Kollimator |

(fortgesetzt)

| Ziffer | Name |
|--------|------|
| 15 | Strahlungsquelle |
| 15' | Strahlungsquelle mit kleinerer Wellenlänge |
| 15'' | Strahlungsquelle mit grösserer Wellenlänge |
| 15a | LED |
| 151 | Kollimator |
| 152 | Reflektor |
| 16 | Detektor |
| 161 | Messvorrichtung mit Pixelmatrix, z.B. Kamera oder Videokamera |
| 1611 | Pixel von Pixelmatrix |
| 1612 | Pixel von Pixelmatrix |
| 1613 | Pixel von Pixelmatrix |
| 17 | semipermeabler Spiegel |
| 18 | Fokussieroptik |
| 19 | Optische Achse Oberfläche - Detektor |
| 19' | Optische Achse Strahlungsquelle - Oberfläche |
| 20 | Ofen |
| 21 | Zeitachse |
| 211 | Zeitpunkt des Starts der Reaktion |
| 212 | Zeitpunkt des Endes der Reaktion |
| 213 | Zeitpunkt während der Reaktion |
| 22 | Achse der Strahlungsintensität |
| 22a | Positiver Teil der Achse der ersten Ableitung der Strahlungsintensität nach der Zeit |
| 22a' | Negativer Teil der Achse der ersten Ableitung der Strahlungsintensität nach der Zeit |
| 22b | Positiver Teil der Achse der zweiten Ableitung der Strahlungsintensität |
| 22b' | Negativer Teil der Achse der zweiten Ableitung der Strahlungsintensität |
| 23 | Temperaturkurve |
| 231 | Temperatur zu Beginn der Reaktion |
| 232 | Temperatur zu Ende der Reaktion |
| 24 | Hypothetischer Verlauf der Strahlungsintensität ohne Reaktionseinfluss |
| 25 | Kurve der Strahlungsintensität (Abnahme des Emissionsgrads und/oder Zunahme des Anteils der vom Detektor weg reflektierten Strahlung) |
| 25' | Tangente oder Extrapolation der Kurve 25 vor Reaktionsbeginn am Punkt 251 |
| 25'' | Tangente oder Extrapolation der Kurve 25 nach Reaktionsende am Punkt 252 |
| 251 | Startpunkt der Reaktion auf Kurve 25 |
| 252 | Endpunkt der Reaktion auf Kurve 25 |
| 25a | Erste Ableitung der Kurve 25 nach der Zeit |
| 251a | Beginn der Reaktion auf der Kurve der ersten Ableitung 25a |
| 252a | Ende der Reaktion auf der Kurve der ersten Ableitung 25a |
| 25b | Zweite Ableitung der Kurve 25 nach der Zeit |
| 251b | Beginn der Reaktion auf der Kurve der zweiten Ableitung 25b |
| 252b | Ende der Reaktion auf der Kurve der zweiten Ableitung 25b |
| 26 | Kurve der Strahlungsintensität (Anstieg des Emissionsgrads und/oder Reduktion der vom Detektor weg reflektierten Strahlung) |
| 26' | Tangente oder Extrapolation der Kurve 26 vor Reaktionsbeginn am Punkt 261 |
| 26'' | Tangente oder Extrapolation der Kurve 26 nach Reaktionsende am Punkt 262 |
| 261 | Startpunkt der Reaktion auf Kurve 26 |
| 262 | Endpunkt der Reaktion auf Kurve 26 |
| 26a | Erste Ableitung der Kurve 26 nach der Zeit |
| 261a | Beginn der Reaktion auf der Kurve der ersten Ableitung 26a |
| 262a | Ende der Reaktion auf der Kurve der ersten Ableitung 26a |

| Ziffer | Name |
|--------|------|
| 26b | Zweite Ableitung der Kurve 26 nach der Zeit |
| 261b | Beginn der Reaktion auf der Kurve der zweiten Ableitung 26b |
| 262b | Ende der Reaktion auf der Kurve der zweiten Ableitung 26b |
| 2611 | Zeitlicher Intensitätsverlauf von Pixel 1611 |
| 2611a | Intensität von Pixel 1611 zum Zeitpunkt 211 (Fig. 8a) |
| 2611b | Intensität von Pixel 1612 zum Zeitpunkt 213 (Fig. 8b) |
| 2611c | Intensität von Pixel 1612 zum Zeitpunkt 212 (Fig. 8c) |
| 2612 | Zeitlicher Intensitätsverlauf von Pixel 1612 |
| 2612a | Intensität von Pixel 1612 zum Zeitpunkt 211 (Fig. 8a) |
| 2612b | Intensität von Pixel 1612 zum Zeitpunkt 213 (Fig. 8b) |
| 2612c | Intensität von Pixel 1612 zum Zeitpunkt 212 (Fig. 8c) |
| 2613 | Zeitlicher Intensitätsverlauf von Pixel 1613 |
| 2613a | Intensität von Pixel 1613 zum Zeitpunkt 211 (Fig. 8a) |
| 2613b | Intensität von Pixel 1613 zum Zeitpunkt 213 (Fig. 8b) |
| 2613c | Intensität von Pixel 1613 zum Zeitpunkt 212 (Fig. 8c) |
| 31 | Gehäuse |
| 32 | Kugelgelenk |
| 41 | Ofen Deckel |
| 42 | Ofen Boden |
| 43 | Heizelement |
| 44 | Probenträger |
| 441 | Geneigte Oberfläche von Probenträger |
| 45 | Thermoelement |

**Patentansprüche**

1. Verfahren zur optischen Kontrolle eines Verlaufs eines auf der Oberfläche eines Körpers ablaufenden physikalischen und/oder chemischen Prozesses, bei dem der Verlauf der Intensität der von einem Teil der Oberfläche ausgehenden Oberflächenstrahlung mit Hilfe einer Messeinrichtung, gemessen wird, wobei die Veränderung des reflektierten Anteils der von einer Fremdquelle stammenden Strahlung (14) über die Veränderung der Intensität der Oberflächenstrahlung (13) gemessen wird, **dadurch gekennzeichnet, dass**
das Verfahren den zeitlichen Verlauf eines Brennprozesses eines dentalen Restaurationsteils mittels einer gegen die Zeit aufgetragenen Intensitätskurve der Oberflächenstrahlung (13) ermittelt,
wobei ein Anfang des Prozesses durch Bestimmung einer Unstetigkeit der vorher stetig verlaufenden und ein Ende des Prozesses durch Bestimmung einer Unstetigkeit der nach dem Ende des Prozesses stetig verlaufenden Intensitätskurve ermittelt werden, und wobei zur Charakterisierung des Kurvenverlaufs während des Prozesses Nullstellen, Maxima und Minima einer ersten Ableitung der Intensitätskurve verwendet werden, und wobei der Verlauf der Kurve zwischen Anfang und Ende des Prozesses zur Steuerung des Brennprozesses des dentalen Restaurationsteils verwendet wird.

2. Verfahren nach Anspruch 1, **dadurch gekennzeichnet, dass** es sich bei der Fremdquelle um eine Strahlenquelle (15) handelt, welche nicht im Strahlungsgleichgewicht mit der Oberfläche (10) steht.

3. Verfahren nach Anspruch 1 oder Anspruch 2, **dadurch gekennzeichnet, dass** es sich bei der Fremdquelle um eine außerhalb eines Ofens (20) befindliche Strahlungsquelle (15) mit einem vom natürlichen Spektrum der Strahlung (13) der Oberfläche (10) abweichenden Spektrum handelt.

4. Verfahren nach einem der vorhergehenden Ansprüche, **dadurch gekennzeichnet, dass** der zeitliche Verlauf der Intensität der Oberflächenstrahlung gleichzeitig bei mindestens zwei Wellenlängen in simultaner Weise bestimmt wird und dass Veränderungen des Verhältnisses dieser Intensitäten oder die Änderung des Farbwert der Oberflächenstrahlung (13) als Indikation für die Veränderung des strukturellen Aufbaus des Materialgefüges und/oder der chemischen Zusammensetzung der Oberfläche (10) verwendet werden.

5. Verfahren nach einem der vorhergehenden Ansprüche, **dadurch gekennzeichnet, dass** die Oberflächenstrahlung (13) von mehreren in Form einer Pixelmatrix angeordneten Sensoren gemessen wird, wobei der Intensitätsverlauf und wahlweise der Verlauf des Farbwerts für jeden dieser Detektoren gemessen und in Form einer Kurve ausgewertet wird, wobei die gemeinsame Auswertung aller Kurven im Rahmen einer Bildauswertung zusätzliche Informationen über die Veränderung der Topographie der Oberfläche (10) während des Ablaufs der Reaktion liefert.

6. Verfahren nach einem der vorhergehenden Ansprüche, **dadurch gekennzeichnet, dass** es sich bei dem phyikalischen und/oder chemischen Prozess um thermisch aktivierte Prozesse wie Phasenumwandlungen, Wärmebehandlungen, thermochemische Prozesse, Sinterprozesse von keramischen, glasartigen, metallischen, metallkeramischen oder polymeren Werkstoffen, unter dem Einfluss von Temperatur oder Strahlung ablaufende Polymerisationsprozesse oder einer Kombination eines oder mehrerer dieser Prozesse handelt

7. Verfahren nach einem der vorhergehenden Ansprüche, **dadurch gekennzeichnet, dass** gleichzeitig mit der Bestimmung der Intensität der Oberflächenstrahlung (13) auch die Temperatur in der Nähe oder auf einer Stelle der Oberfläche (10) mittels eines spannungs- oder strombildenden Verfahrens, insbesondere eines Thermoelements oder temperaturabhängigen Widerstands oder über eine im Infrarotbereich stattfindende optische Messung erfolgt.

8. Verfahren nach Anspruch 7, **dadurch gekennzeichnet, dass** zur Bestimmung der Intensität der Oberflächenstrahlung (13) einer der Kanäle eines Quotientenpyrometers verwendet wird, wobei die Kombinationa der Messwerte beider Kanäle zur Bestimmung der Temperatur verwendet wird.

9. Verfahren nach Anspruch 6, **dadurch gekennzeichnet, dass** es sich bei dem Polymerisationsprozess um eine durch UV-Bestrahlung ausgelöste Reaktion handelt, wobei als Strahlungsquelle (15) die für den Polymerisationsprozess benötigte Beleuchtung und für den Detektor ein Wellenlängenbereich gewählt wird, der im Bereich dieser Strahlungsquelle (15) liegt.

10. Vorrichtung zur optischen Kontrolle eines Verlaufs eines auf einer Oberfläche (10) eines Körpers (11) ablaufenden physikalischen und/oder chemischen Brennprozesses eines dentalen Restaurationsteils, wobei die Vorrichtung eine Messeinrichtung (16) aufweist, durch welche die Intensität und wahlweise der Farbwert der von der Oberfläche (10) ausgehenden Oberflächenstrahlung (13) messbar ist, und wobei eine Strahlungsquelle (15) Strahlung (14) auf die Oberfläche (10) aussendet, **dadurch gekennzeichnet, dass** mittels der Vorrichtung eine gegen die Zeit aufgetragene Intensitätskurve der Oberflächenstrahlung (13) und mittels der Intensitätskurve ein Anfang und ein Ende des Brennprozesses ermittelbar sind und der Verlauf der Kurve zwischen Anfang und Ende des Prozesses zur Steuerung des Brennprozesses des dentalen Restaurationsteils einsetzbar ist.

11. Vorrichtung nach Anspruch 10, **dadurch gekennzeichnet, dass** die Vorrichtung einen Kollimator aufweist, der die von der Strahlungsquelle (15) ausgesendete Strahlung (142) auf die Oberfläche (10) ausrichtet.

12. Vorrichtung nach Anspruch 10 oder Anspruch 11, **dadurch gekennzeichnet, dass** die Messeinrichtung (16) eine fokussierende Optik besitzt.

13. Vorrichtung nach einem der Ansprüche 10 bis 12, **dadurch gekennzeichnet, dass** die Vorrichtung Lichtwellenleiter aufweist, über welche die Strahlung (141) von der Lichtquelle (15) zur Oberfläche (10) und wahlweise auch die Strahlung (13) von der Oberfläche (11) zur Messeinrichtung (16) erfolgt.

14. Vorrichtung nach einem der Ansprüche 10 bis 13, **dadurch gekennzeichnet, dass** die Vorrichtung als Lichtquelle (15) eine Lampe mit breitem Wellenlängenbereich, bevorzugt eine LED, eine Halogenlampe oder einen Laser aufweist.

15. Vorrichtung einem der Ansprüche 10 bis 14, **dadurch gekennzeichnet, dass** die Vorrichtung als Messeinrichtung (16) eine elektronische Bilderfassungseinheit mit lichtsensitivem Chip, vorzugsweise eine Kamera oder Videokamera aufweist.

16. Vorrichtung nach einem der Ansprüche 10 bis 15, **dadurch gekennzeichnet, dass** die Strahlenquelle (15) und die Messeinrichtung (16) gegeneinander angewinkelte optische auf die Oberfläche (10) ausgerichtete Achsen aufweisen, wodurch ein reproduzierbarer Anteil der von der Lichtquelle (15) ausgesendeten Strahlung von der Messeinrichtung (16) erfassbar ist.

**17.** Vorrichtung nach einem der Ansprüche 10 bis 16, **dadurch gekennzeichnet, dass** die Vorrichtung einen semipermeablen Spiegel (17) aufweist, auf den die optischen Achsen der Strahlungsquelle (15) und der Messeinrichtung (16) ausgerichtet sind, und wobei von dort bis zur Oberfläche (10) die Strahlenquelle (15) und die Messeinrichtung (16) dieselbe optische Achse besitzen.

**18.** Vorrichtung nach einem der Ansprüche 10 bis 17, **dadurch gekennzeichnet, dass** die Vorrichtung einen Ofen aufweist in dem die Oberfläche (10) angeordnet ist, wobei die Strahlungsquelle (15) und die Messeinrichtung (16) an der Außenseite des Ofens montiert sind und wobei ihre optischen Achsen über mindestens ein vakuumdichtes Fenster mindestens einer nach Außen abgeschlossenen Öffnung zur Oberfläche (10) auf die Oberfläche ausgerichtet sind.

**19.** Vorrichtung nach Anspruch 18, **dadurch gekennzeichnet, dass** die Strahlungsquelle (15) und die Messeinrichtung (16) auf einer gemeinsamen Halterung angeordnet sind, wobei diese Halterung und die optischen Achsen (19) und (19') über mindestens eine Gelenkvorrichtung in mindestens einer Richtung zum Ausrichten gedreht werden können.

**Claims**

**1.** A method for optically monitoring a progression of a physical and/or chemical process taking place on the surface of a body, in which the progression of the intensity of the surface radiation, which emanates from part of the surface, is measured with the aid of a measuring device, wherein the change of the reflected portion of the radiation (14), which emanates from an external source, is measured through the change of intensity of the surface radiation (13), **characterized in that**
the process ascertains the temporal progression of a firing process of a dental restoration part by means of an intensity curve of the surface radiation (13) plotted against time,
wherein a beginning of the process is ascertained by determining a discontinuity in the intensity curve which is running continuously before the start of the process, and wherein an end of the process is ascertained by determining a discontinuity of the intensity curve which is running continuously after the end of the process, and wherein during the process zeros, maxima and minima of a first derivative of the intensity curve are used to characterize the progression of the curve, and wherein the progression of the curve between the beginning and the end of the process is used to control the firing process of the dental restoration part.

**2.** The method as claimed in claim 1, **characterized in that** the external source is a radiation source (15) which is not in a radiation equilibrium with the surface (10).

**3.** The method as claimed in claim 1 or claim 2, **characterized in that** the external source is a radiation source (15) located outside the furnace (20), having a spectrum differing from the natural spectrum of the radiation (13) of the surface (10).

**4.** The method as claimed in one of the preceding claims, **characterized in that** the temporal progression of the intensity of the surface radiation is simultaneously determined at at least two wavelengths in a simultaneous matter and that changes in the ratio of these Intensities or the change in the color value of the surface radiation (13) are used as an indication of the change in the structural architecture of the material structure and/or the chemical composition of the surface (10).

**5.** The method as claimed in one of the preceding claims, **characterized in that** the surface radiation (13) is measured with the aid of several sensors arranged in the form of a pixel
array, wherein the progression of the intensity and optionally the progression of the color value is measured for each individual detector and is evaluated in the form of a curve, wherein the joint evaluation of all curves within the scope of an image evaluation provides additional information about the change in topography of the surface (10) during the course of the reaction.

**6.** The method as claimed in one of the preceding claims, **characterized in that** the physical and/or chemical process is a thermally activated process such as a phase transformation, a heat treatment, a thermochemical process, a sintering process of ceramic, vitreous, metallic, metal-ceramic or polymeric materials, a polymerization process taking place under the influence of temperature or radiation or a combination of one or more of these processes.

**7.** A method as claimed In one of the preceding claims, **characterized in that** contemporaneously with the determination of the intensity of the surface radiation (13), a determination of the temperature in the vicinity of or on a spot of the surface (10) is carried out with the aid of a voltage- or current generating method, in particular with the aid of a thermocouple or a temperature-dependent resistance or with the aid of an optical measurement taking place in the infrared sector.

8. A method as claimed in claim 7, **characterized in that** one of the channels of a ratio Pyrometer is used to determine the intensity of the surface radiation (13), wherein the combination of the measured values of both channels is used to determine the temperature.

9. A method as claimed in claim 6, **characterized in that** the polymerization process is a reaction triggered by UV irradiation, wherein as a radiation source (15) the illumination necessary for the polymerization process is selected as well as a wavelength area for the detector that is within the area of this radiation source (15).

10. An apparatus for optically monitoring a progression of a physical and/or chemical firing process of a dental restoration part taking place on a surface (10) of a body (11), said apparatus having a measuring device (16) by means of which the intensity and optionally the color value of the surface radiation (13) which is emitted by the surface (10) can be measured, and wherein a radiation source (15) emits radiation (14) onto the surface (10), **characterized in that** by means of the apparatus an intensity curve of the surface radiation (13) plotted against time and by means of the intensity curve a beginning and an end of the firing process can be ascertained and the progression of the curve can be inserted between the beginning and the end of the process to control the firing process of the dental restoration part.

11. The apparatus as claimed in claim 10, **characterized in that** the apparatus comprises a collimator which directs the radiation (142) emitted by the radiation source (15) towards the surface (10).

12. The apparatus as claimed in claim 10 or 11, **characterized in that** the measuring device (16) has a focusing optical system.

13. The apparatus as claimed in one of the claims 10 to 12, **characterized in that** the apparatus comprises optical waveguides by means of which the radiation (141) occurs from the light source (15) to the surface (10) and optionally also the radiation (13) from the surface (11) to the measuring device (16).

14. The apparatus as claimed in one of the claims 10 to 13, **characterized in that** the apparatus comprises a lamp as a light source (15) with a broad wavelength range, preferably a LED, a halogen lamp or a laser.

15. The apparatus as claimed in one of the claims 10 to 14, **characterized in that** the apparatus comprises an electronic Imagine unit with a light-sensitive chip, preferably a camera or video camera, as a measuring device (16).

16. The apparatus as claimed in one of the claims 10 to 15, **characterized in that** the radiation source (15) and the measuring device (16) have angled optical axes relative to each other that are directed to the surface (10), whereby a reproduceable portion of the radiation emitted by the light source (15) can be detected by the measuring device (16).

17. The apparatus as claimed in one of the claims 10 to 16, **characterized in that** the apparatus comprises a semipermeable mirror (17) to which the optical axes of the the radiation source (15) and the measuring device (16) are directed, and wherein from the mirror to the surface (10) the radiation source (15) and the measuring device (16) have the same optical axis.

18. The apparatus as claimed in one of the claims 10 to 17, **characterized in that** the apparatus comprises a furnace in which the surface (10) is arranged, wherein the radiation source (15) and the measuring device (16) are mounted on the outside of the furnace and wherein the optical axes thereof are directed towards the surface by means of at least one vacuum-sealed window of an opening towards the surface (10), which opening is closed to the outside.

19. The apparatus as claimed in claim 18, **characterized in that** the radiation source (15) and the measuring device (16) are arranged on a common holder, wherein the holder and the optical axes (19) and (19') can be rotated by means of at least one hinge apparatus in at least one direction in order to align them.

**Revendications**

1. Procédé de contrôle optique du déroulement d'un processus physique et/ou chimique en cours sur la surface d'un corps, où le cours de l'intensité de la radiation en surface émise par une partie de la surface est mesurée à l'aide d'un dispositif de mesure, où la variation de la partie réfléchie de la radiation (14) provenant d'une source étrangère est mesurée par la variation de l'intensité de la radiation en surface, **caractérisé en ce que** le procédé détermine l'évolution temporelle d'un processus de cuisson d'une pièce de restauration dentaire à l'aide d'une courbe d'intensité de la radiation en surface (13) tracée par rapport au temps,
où sont détectés un début du processus par la détermination d'une variabilité de la courbe d'intensité jusque-là invariable et une fin du processus par la détermination d'une variabilité de la courbe d'intensité invariable après la fin du processus, et où au cours du processus un point zéro, des maxima et des minima d'une première dérivée du tracé de la courbe d'intensité sont utilisés pour caractériser la courbe et où le tracé de la courbe entre le début et la fin du processus est utilisé pour contrôler le processus de cuisson de la pièce de restauration dentaire.

2. Procédé selon la revendication 1, **caractérisée en ce que** la source étrangère est une source de rayonnement (15), qui n'est pas en équilibre radiatif avec la surface (10).

3. Procédé selon la revendication 1 ou la revendication 2, **caractérisé en ce que** la source étrangère est une source de rayonnement (15) situé en dehors d'un four (20) avec un spectre différent du spectre naturel de rayonnement (13) de la surface (10).

4. Procédé selon l'une des revendications précédentes, **caractérisé en ce que** l'évolution temporelle de l'intensité de la radiation en surface est déterminée au même moment à au moins deux longueurs d'onde différentes de façon simultanée et que des changements dans le rapport de l'intensité ou des modifications de la valeur de couleur de la radiation en surface (13) sont utilisés comme indication de la modification de la construction structurelle de la structure du matériau et/ou de la composition chimique de la surface (10).

5. Procédé selon l'une des revendications précédentes, **caractérisé en ce que** la radiation en surface (13) est mesurée par plusieurs capteurs, disposés sous forme d'une matrice de pixels, où le gradient d'intensité et, sélectivement, le gradient de la valeur de couleur sont mesurées et évaluée sous la forme d'une courbe pour chacun de ces capteurs, où l'analyse conjointe de toutes les courbes dans le contexte d'une analyse d'image fournit des informations supplémentaires sur la modification de la topographie de la surface (10) pendant le déroulement de la réaction.

6. Procédé selon l'une des revendications précédentes, **caractérisé en ce que** le processus physique et/ou chimique consiste en des processus thermiquement activés tels que des transformations de phase, des processus thermochimiques, des traitement thermiques, des processus de frittage de matériaux céramiques, de type verre, métalliques, métallo-céramiques ou polymères sous l'influence de la température ou de la radiation provenant de procédés de polymérisation en cours d'exécution ou une combinaison d'un ou plusieurs de ces processus.

7. Procédé selon l'une des revendications précédentes, **caractérisé en ce qu'**e simultanément avec la détermination de l'intensité de la radiation à la surface (13), celle de la température à proximité de ou à un site sur la surface (10) est aussi effectuée au moyen d'un processus de génération de tension ou de courant, en particulier d'un élément séparateur ou d'une résistance dépendant de la température ou par une mesure optique dans la zone des infrarouge.

8. Procédé selon la revendication 7, **caractérisé en ce que** l'un des canaux d'un pyromètre ratio sert à déterminer l'intensité de la radiation superficielle (13), où la combinaison des valeurs de mesure des deux canaux est utilisée pour déterminer la température.

9. Procédé selon la revendication 6, **caractérisé en ce que** le procédé de polymérisation est une réaction déclenchée par irradiation UV, où l'éclairage requis pour le procédé de polymérisation est sélectionné comme source de rayonnement (15) et comme détecteur une longueur d'onde qui se trouve dans la gamme de cette source de rayonnement (15).

10. Dispositif de contrôle optique du déroulement d'un processus physique et/ou chimique en cours sur la surface d'un corps (11) d'une pièce de restauration dentaire, où le dispositif présente un dispositif de mesure (16), par laquelle l'intensité et, sélectivement, la valeur de couleur de la radiation de surface (13) émise (10) depuis la surface est mesurable, et où une source de rayonnement (15) émet une radiation (14) sur la surface (10), **caractérisée en ce qu'**au moyen du dispositif une courbe d'intensité de la radiation de Surface (13) tracé par rapport au temps et au moyen de la courbe d'intensité un début et une fin du procédé de cuisson peuvent être déterminé et où le tracé de la courbe entre le début et la fin du processus peut être utilisé pour contrôler le processus de cuisson de la pièce de restauration dentaire.

**11.** Dispositif selon la revendication 10, **caractérisé en ce que** le dispositif présente un collimateur, qui aligne la radiation (142) émise par la source de rayonnement (15) sur la surface (10).

**12.** Dispositif selon l'une des revendications 10 ou 11, **caractérisé en ce que** le dispositif de mesure (16) présente une optique de mise au point.

**13.** Dispositif selon l'une des revendications 10 à 12, **caractérisé en ce que** le dispositif présente des conducteurs à fibres optiques, par lesquels se réalisent la radiation (141) de la source lumineuse (15) vers la surface (10) et sélectivement également la radiation (13) de la surface (11) au dispositif de mesure (16).

**14.** Dispositif selon l'une des revendications du 10 à 13, **caractérisé en ce que** le dispositif présente comme source lumineuse (15) une lampe dans une large gamme de longueurs d'ondes, de préférence un LED ou une lampe halogène ou un laser.

**15.** Dispositif selon l'une des revendications 10 à 14, **caractérisé en ce que** le dispositif présente une unité d'acquisition d'image électronique avec une puce sensible à la lumière comme un dispositif de mesure (16) de préférence une caméra ou une caméra vidéo.

**16.** Dispositif selon l'une des revendications 10 à 15, **caractérisé en ce que** la source de rayonnement (15) et le dispositif de mesure (16) présentent des axes optiques orientés sur la surface (10) inclinés l'un contre l'autre, et par conséquent une quantité reproductible de la radiation émise par la source lumineuse (15) est détectable par la le dispositif de mesure (16).

**17.** Dispositif selon l'une des revendications 10 à 16, **caractérisé en ce que** le dispositif dispose d'un miroir semi-perméable (17), vers lequel les axes optiques de la source de rayonnement (15) et le dispositif de mesure (16) sont alignés, et où de là jusqu'à la surface (10) la source de rayonnement (15) et le dispositif de mesure (16) ont le même axe optique.

**18.** Dispositif selon l'une des revendications 10 à 17, **caractérisé en ce que** le périphérique comporte un four - dans lequel la surface (10) est disposée, où la source de rayonnement (15) et le dispositif de mesure (16) sont montés à l'extérieur du four et où leur axe optique est aligné sur la surface par au moins une fenêtre étanche au vide par au moins une ouverture à la surface (10) fermée vers l'extérieur.

**19.** Dispositif selon la revendication 18, **caractérisé en ce que** la source de rayonnement (15) et le dispositif de mesure (16) sont disposés sur un support commun, où ce support et les axes optiques (19) et (19') peuvent être tournés par le biais d'au moins un dispositif articulé dans au moins une direction pour être aligné.

**Fig. 1**

**Fig. 2a**

**Fig. 2b**

**Fig. 2c**

**Fig. 3a**

**Fig. 3b**

**Fig. 3c**

**Fig. 4a**

**Fig. 4b**

**Fig. 5**

Fig. 6

**Fig. 7a**

**Fig. 7b**

**Fig. 8a**

**Fig. 8b**

**Fig. 8c**

**Fig. 8d**

**Fig. 9**

**Fig. 10**

**Fig.11**

**Fig. 12**

**Fig. 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4132203
- EP 191300 A2

- DE 10341491 B3